# EUROPÄISCHE PATENTSCHRIFT

(11) **EP 1 653 250 B1**
(45) Veröffentlichungstag und Bekanntmachung des Hinweises auf die Patenterteilung: **23.02.2011**
(21) Anmeldenummer: 03817672.3
(22) Anmeldetag: 25.07.2003
(51) Int. Cl.: G08G 5/00

(54) **INTEGRIERTES SYSTEM FÜR FLUGZEUG-WIRBELSICHERHEIT**
INTEGRATED SYSTEM FOR AIRCRAFT VORTEX SAFETY
SYSTEME INTEGRE DE SECURITE EN MATIERE DE TOURBILLONS POUR AERONEF

(43) Veröffentlichungstag der Anmeldung: 03.05.2006
(73) Patentinhaber: Baranov, Nikolai Alekseevich, Moscow, 109153 (RU); Belotserkovski, Andrei Sergeevich, Moscow, 124683 (RU); Kanevski, Mikhail Igorevich, Moscow, 127572 (RU); Pasekunov, Igor Vladimirovich, Moscow 123481 (RU); FGU "FAPRID", Moscow, 109028 (RU); ZAO ROSSIYSKAYA AKTSIONERNAYA ASSOTSIATSIYA "SPETSTEKHNIKA", Moskovskaya obl., 141980 (RU)
(72) Erfinder: Baranov, Nikolai Alekseevich, Moscow, 109153 (RU); Belotserkovski, Andrei Sergeevich, Moscow, 124683 (RU); Kanevski, Mikhail Igorevich, Moscow, 127572 (RU); Pasekunov, Igor Vladimirovich, Moscow 123481 (RU)
(74) Vertreter: Jeck, Anton
(86) Internationale Anmeldenummer: PCT/RU2003/000334
(87) Internationale Veröffentlichungsnummer: WO 2005/010555

(56) Entgegenhaltungen:
- RU-C1- 2 088 487
- US-A- 4 137 764
- US-A- 5 657 009
- US-A- 5 724 040
- US-A1- 2002 075 171
- HINTON D A ET AL: "Development of a wake vortex spacing system for airport capacity enhancement and delay reduction" DIGITAL AVIONICS SYSTEMS CONFERENCES, 2000. PROCEEDINGS. DASC. THE 19TH 7-13 OCTOBER 2000, PISCATAWAY, NJ, USA,IEEE, Bd. 1, 7. Oktober 2000 (2000-10-07), Seiten 3E61-3E610, XP010525365 ISBN: 0-7803-6395-7

## Beschreibung

Die Erfindung gehört zu Verfahren und Einrichtungen der Flugsicherheit, insbesondere zu Verfahren zur Vorbeugung von außerordentlichen Situationen, die mit einem möglichen Einflug von Flugzeugen in die Wirbelschleppengefährdungszone eines Wirbelerzeugers, u. a. beim Luftabfluss eines Objekts, verbunden sind.

Das Problem der Flugsicherheit ist sehr aktuell und beinhaltet eine ganze Reihe von sowohl wissenschaftlich-technischen als auch methodischen Organisationsaufgaben. Eine dieser Aufgaben ist die Flugsicherheit in einer solchen Situation, in der der flugsicherheitsbestimmende Faktor die Wirkung einer aerodynamischen Strömung hoher Turbulenz auf ein Flugzeug ist, wobei die Strömung sowohl bei der Bewegung des stromerzeugenden Objekts in der Umgebung des Flugzeugs als auch bei Gegenwart der mit Strömungen hoher Turbulenz und Wirbelung umfließenden Objekte in der Umgebung eines Flugzeugs erzeugt werden.

Es ist bekannt, dass bei der Bewegung eines Flugzeugs in der Luft eine so genannte Wirbelschleppe erzeugt wird, die von der das Flugzeug umfließenden Luftströmung gebildet wird.

Der Einflug des Flugzeugs in die Wirbelschleppe eines anderen Objekts, beispielsweise eines anderen Flugzeugs, führt zu einer wesentlichen Änderung des Angriffs- und Gleitwinkels. Das Flugzeug ist dabei der Wirkung aerodynamischer Kräfte und Momente ausgesetzt, die es beispielsweise seitlich von der Schleppe verschieben und in kleineren Höhen, beispielsweise beim Starten oder Landen, wegen der unmöglichen Kompensation dieser Wirkung mittels Bedienungsorganen des Flugzeugs zu außerordentlichen Situationen führen können. Die Entwicklung von Flugzeugen kleiner Spannweite mit großer spezifischer Beanspruchung führen zu einer Erhöhung der Wirbelschleppenintensität, wodurch die Einfluggefahr eines Flugzeugs in diese Schleppe erhöht wird.

Mehrere Untersuchungen der Wirbelausbreitung und -alterung zeigten, dass atmosphärische Faktoren, wie Wind, Windverschiebung, Luftraumschichtung und Turbulenz, große Bedeutung für diese Prozesse haben.

Es besteht eine potenzielle Optimierungsmöglichkeit eines Sicherheitsabstands zwischen den Flugzeugen bei Landung, Starten und Flug aufgrund zuverlässiger Prognosen des Wirbelschleppenverhaltens unter Einsatz laufender und kurzzeitiger Prognosen für meteorologische Bedingungen sowie der Wirkung von atmosphärischen Bedingungen und der Erdnähe auf das Wirbelschleppenverhalten.

Eine der Problemlösungen der Flugsicherheit in der Situation, in der der bestimmende Faktor eine aerodynamische Wirbelschleppe ist, ist die Wahl der Flugzustände, die das vorgegebene Sicherheitsniveau gewährleisten.

Zur Lösung dieser Aufgabe kann die Entwicklung von Bordrechensystemen beitragen, die in Echtzeit arbeiten, das Gefährdungspotential der auf das Flugzeug wirkenden aerodynamischen Strömung bestimmen und die Wahl des Verfahrens zur weiteren Korrektur der Flugzeuglenkung zur wirksameren Kompensierung dieser Strömungen erlauben.

Eine weitere Aufgabe, die zu den Informationsaufgaben gezählt werden kann, ist die Bereitstellung einer Information über die Lage der Wirbelschleppe und des Flugzeugs in Bezug auf den prognostizierten Zeitpunkt.

Durch die US 5 845 874 A ist ein Verfahren und eine Vorrichtung visueller Wirbelschleppenabbildung mittels mathematischer Wirbelschleppenmodelle aufgrund von Flugparametern des wirbelerzeugenden Flugzeugs unter Berücksichtigung der Wirkung atmosphärischer Bedingungen auf das Wirbelschleppenverhalten bekannt. Gemäß einer technischen Lösung ist dabei ein schnellwirkendes Display eingesetzt, mit dem eine Visualisierung simulierter Wirbelschleppen einzelner Flugzeuge durchgeführt wird, die sich in der Nähe des genannten Flugzeugs befinden. Bei mehreren anderen Flugzeugen in dem das genannte Flugzeug umgebenden Luftraum, beispielsweise in der Nähe eines Flughafens, bildet das Display eine große Anzahl von simulierten Wirbelschleppen ab, wodurch Schwierigkeiten bei der Bestimmung der Wirbelschleppen, die eine tatsächliche Gefahr für das Flugzeug darstellen, und bei der Bestimmung der Gefahr, die vernachlässigt werden kann, entstehen.

Einer der vielversprechenden Wege zur Erhöhung der Flugsicherheit ist eine Datenverfügbarkeit über die prognostizierende Lage der Wirbelschleppe in Realzeit bei einem Einflug, bei dem ein Unfall passieren kann.

Durch die US 6 177 888 A ist ein Warnsystem gegen die Wirbelschleppenturbulenz bekannt, das an Bord eines Flugzeugs angeordnet ist und dem Piloten eine Information über den eventuellen Einflug in die Wirbelschleppe eines anderen Flugzeugs erst dann liefert, wenn das Warnsystem sicherstellt, dass der Einflug des nachfliegenden Flugzeugs in die Wirbelschleppe eines anderen Flugzeugs in einer gewissen vorgegebenen Zeitperiode erfolgt. Das Warnsystem sieht dabei eine Zusammenwirkung der Flugzeuge, einen Austausch von Warnsignalen und von Daten über die Flughöhe, den Abstand und die Peilung und eine Überwachung der Wirbelschleppenbahn unter Berücksichtigung der örtlichen Windgeschwindigkeit vor und kann den Abstand oder die Zeit bis zum Einflug des Flugzeugs in die Wirbelschleppe eines anderen Flugzeugs bestimmen. Das Warnsystem gewährleistet die Anzeige der Nähe zur Wirbelschleppe, wenn der Abstand und die Zeit eine vorgegebene Schwelle unterschreiten. Die Breite und die Höhe der Wirbelschleppe werden dabei in jedem Punkt einer Punktmenge längs der Wirbelschleppenbahn als Abstandsfunktion des angegebenen Punkts zum Flugzeug errechnet.

Dieses Warnsystem liefert aber keine Informationen über das Gefährdungspotential des Einflugs in die erkannte Wirbelschleppe und über das angemessene Manöver des Flugzeugs, um den Einflug in die Wirbelschleppe auszuschließen.

Darüber hinaus fordert die Mehrzahl der Flugbedingungen eine Verringerung des Abstands zwischen den Flugzeugen, beispielsweise bei nacheinander folgendem Starten und Landen im Flughafen; dies ist für die Erhöhung der Flughafenkapazität von Bedeutung.

Zuverlässige Information über die Lage und Struktur der Wirbelschleppe und über die Besonderheiten der Wirkung der Wirbelschleppe auf ein Flugzeug in der prognostizierenden Zeit erfordert die Erfüllung von widersprüchlichen Forderungen an die höhere Wirksamkeit der Flugaufgabendurchführung und an die Erhöhung der Flugsicherheit.

Durch die US 6 211 808 B1 ist ein Wirbelschleppenkollisionswarnsystem, mit dem jedes Flugzeug ausgestattet ist, zur Warnung des Piloten vor einer prognostizierten, gefährlichen Gegenwart eines Flugzeugs bekannt, das vor einem anderen in der Umgebung befindlichen Flugzeug fliegt. Das Warnsystem umfasst eine sphärische Antenne aus dielektrischem Material und acht Sektoren mit Empfängern zur Gewinnung von Mikrowellensignalen, die von in der Umgebung befindlichen, anderen Flugzeugen reflektiert werden. Das Warnsystem ist aber teuer und liefert dem Piloten keine Informationen über gefährliche Luftströme.

Durch die WO 00/71985 ist eine technische Lösung bekannt, die ein Verfahren zum Vermeiden der Überschneidung des Flugzeugwegs mit der Wirbelschleppe eines anderen Flugzeugs betrifft. Diese Lösung beinhaltet eine Bestimmung der Position, der Konfiguration und der Art der Wirbel, die vom anderen Flugzeug verursacht werden, dessen Gegenwart mit Hilfe von Informationen des Bordsystems des ersten Flugzeugs, Informationen vom anderen Flugzeug oder vom Flughafen bestimmt wird, eine Bestimmung der Flugzeughöhe, der prognostizierenden Position der von Flugzeug erzeugten Wirbelschleppe unter Verwendung atmosphärischer Bedingungen, insbesondere der Windgeschwindigkeit, der Windrichtung und der Lufttemperatur, eine Auswertung der erhaltenen Daten in Bezug auf Referenztabellen oder eine Simulation der Wirbelschleppe mit einer Visualisierung der Position und Bahn der Wirbelschleppe bezüglich des ersten Flugzeugs und eine Prognose des Überschneidungspunkts der Wirbelschleppenbahn mit der Bewegung des ersten Flugzeugs mit einer Wamsignalerzeugung im Fall einer solchen Überschneidung. Im Wesentlichen wird das Verfahren zur Flugsicherheit zweier Flugzeuge im Terminal-Bereich eingesetzt, und seine Realisierung kann zu einem größeren Höhenabstand des ersten Flugzeuges vom zweiten Flugzeug führen. Dabei wird das so genannte Verkehrskollisionsvermeidungssystem (Traffic Collision Avoidance System) eingesetzt. Dem Piloten des ersten Flugzeugs werden aber Informationen über alle Wirbelbereiche angezeigt, die in der Umgebung des ersten Flugzeugs infolge des zweiten Flugzeugs vorhergesagt werden und die aber kein tatsächliches Gefahrenbild für den Flug liefern.

Es ist bekannt, dass die NASA eine große Aufmerksamkeit der Wirksamkeitssteigerung des Terminal-Bereichs, insbesondere beim Starten und Landen von Flugzeugen, schenkt, und eine der Entwicklungen ist die Erarbeitung eines Systems der Wirbelschleppenstaffelung (AVOSS), das Ausgangssignale mehrerer Systeme vereinigt und von der Wetterlage abhängende, dynamische Intervallkriterien der Wirbelschleppen festsetzt (37th Aerospace Sciences Meeting & Exihibit, January 11-14, 1999, Reno, NY, NASA Langly Research Centre, Hampton, VA). Diese Systeme liefern laufende und prognostizierende Wetterlagen, Modelle der Wirbelschleppenausbrei-tung und -alterung in diesen Witterungsverhältnissen von der Erdoberfläche bis Höhe des Landungs- oder Startgleitwegs und gewährleisten eine Rückmeldung des Verhaltens der Wirbelschleppen in Realzeit. Das Verhalten der Wirbelschleppe wird mit vorbestimmten Größen des Sicherheitskorridors und der Bestimmung der Wirbelschleppenalterung verglichen, und somit wird die gesuchte Staffelung der Flugzeuge bestimmt. Wenn die Wirbelschleppen länger als erwartet halten, wird die Verkürzung des Sicherheitsabstands zwischen Start oder Landung verboten. Dabei wird das Verhalten der Wirbelschleppe durch eine Mehrzahl von "Fenstern" des Landeanflugs von der Gleitweghöhe bis zur Stirnseite der Start- und Landebahn berechnet.

Dieses System ist aber dadurch beschränkt, dass eine vertikale Windverschiebung nicht erfasst wird, die ein Absinken der Wirbelschleppe verhindern oder zu einem Ansteigen der Wirbelschleppe führen kann, und dass das konkrete Turbulenzausmaß nicht erfasst wird, das für die Simulation der Schleppenalterung erforderlich ist. Ferner treten weitere Beschränkungen auf, die zu einer außerordentlichen Situation infolge einer Nichtkonformität der vorberechneten Schleppenparameter mit den tatsächlichen Parametern der Wirbelschleppe führen.

Darüber hinaus führt der Einsatz des VOSS-Systems zur einer Erhöhung der Belastung der Fluglotsen, die ohnehin hohen emotionellen Stressanstrengungen im Hintergrund von wesentlicher Intensivierung ihrer Arbeit ausgesetzt werden, was nicht wünschenswert ist, weil dies die Möglichkeit nicht angemessener Entscheidungen erhöht.

Man muss im Auge behalten, dass ausländische Sicherheitssysteme meistens auf den Einsatz von so genannten Instrumentenflugregeln ausgerichtet sind, wobei die Lenkung des Flugzeugs aufgrund von Lotsenanweisungen in direkter oder automatischer Arbeitsweise durchgeführt wird.

Aus der US 2002/075171 A1 ist eine Schaltung und ein Verfahren für die Voraussage eines Schnittpunkts eines Gastflugzeugwegs mit der Wirbelschleppe eines anderen Flugzeugs offenbart, wobei diese Schaltung und dieses Verfahren sich grundsätzlich von der vorliegenden Erfindung unterscheiden. Das Verfahren gemäß dieser US-Schrift ist derart gestaltet, dass eine Information über den Typ eines Flugzeugs gewonnen wird, und zwar mit einer elektronischen Schaltung, die die Höhe und die Position des Flugzeugs in Bezug auf einen Flugweg feststellt, mit einer elektronischen Schaltung, die die Konfiguration des Flugzeugs voraussagt, und mit einer elektronischen Schaltung, die die Position einer Wirbelschleppe voraussagt, die diesem Flugzeug entspricht. Bei dieser US-Schrift wird die Information über die Wirbelsicherheit nur dem Fluglotsen weitergegeben, und der Pilot befolgt nur die Anweisungen dieses Fluglotsens. Der Pilot hat keine vollständige Vorstellung über die laufende Situation im Flugbereich. Dabei bestimmt der Fluglotse die gefährliche Zone aufgrund der theoretischen Wirbelspur und der festgelegten Normen des Abstands zwischen den Flugzeugen hauptsächlich unter den Bedingungen des Abflugs und der Landung. Die aus dieser US-Schrift bekannte Lösung stützt sich auf die Darstellung der Flugsituation aus der Sicht des außenstehenden Beobachters, beispielsweise von oben, wie dies der Fall mit dem Fluglotsen ist, der den Flugverkehr kontrolliert. Der Nachteil dieser Lösung ist die Notwendigkeit, die laufende Situation vom Piloten zu verarbeiten, wodurch eine Erhöhung der Gespanntheit der Pilotentätigkeit und der Zeit zum Treffen einer Entscheidung des Piloten bewirkt wird.

Es ist aber bekannt, dass bei der Fluglotsentätigkeit das Treffen von Entscheidungen in außerordentlichen Situationen das Schwierigste ist. Die Fluglotsentätigkeit besteht in zwei Schritten: Erkennung der Situation und Festlegung der Vorgehensweise zu ihrer Beseitigung. Bevor der Lotse einen nächsten Tätigkeitsschritt ausführt, muss er seine weiteren Schritte überlegen. Die Aufnahme visueller und Sprechsignale in Worten mit Dauerspeichern und visuelle Mittel oder das Gehör benötigen eine gewisse Zeit gerade in der Situation des Zeitmangels. Die Aufnahmezeit graphischer Symbole ist wesentlich kürzer, und die Erkennung der Situation mittels einer Anzeige markierter Abbildungszonen erlaubt, eine Entscheidung in angemessener Zeit zu treffen.

Ferner führt die Wirkung der Beschleunigung des Flugzeugs zu einer Störung des Gehirnblutflusses beim Piloten und kann bei emotioneller Überanstrengung zu kurzzeitiger Bewusstseinslosigkeit führen. Deswegen wird bevorzugt, dem Piloten oder Fluglotsen die benötigten Informationen vor dem Treffen von Entscheidungen und in graphischen Symbolen zur Verfügung zu stellen.

Das Ziel der Erfindung ist die Entwicklung eines Sicherheitssystems des Flugzeugs für die gefährlichen Bedingungen des Einflugs in die Wirbelschleppenzonen, die von anderen Flugzeugen, oberirdischen Objekten und beweglichen und nicht beweglichen Seeobjekten erzeugt werden, die sich in der Umgebung des fliegenden Flugzeugs, insbesondere beim Start und Landen, befinden.

Die Erfindung hat sich zum Ziel gesetzt, ein komplexes Wirbelsicherheitssystem zu entwickeln, das umfasst eine Information des Benutzers über die von unterschiedlichen Objekten erzeugten Wirbelschleppen in der Umgebung des Flugzeugs, die für das Flugzeug nach einem von dem Benutzer vorgegebenen Gefahrenkriterium gefährlich sein können, über geometrische Parameter gefährlicher Zonen, bei Einflug in denen ein Flugunfall nach gewisser Zeit seit der Information darüber erfolgen kann, und Veranlassen des Piloten oder anderer Benutzer, die Arbeitsweise des Flugzeuges beeinflussen können, zur Bildung eines Lenkungssignals, das Ausweichmanöver des Flugzeuges vor Wirbelschleppengefährdungszonen gewährleistet.

Die gestellte Aufgabe wird dadurch gelöst, dass das integrierte Wirbelsicherheitssystem des Flugzeugs Folgendes aufweist:
- ein Informationssubsystem, das Informationen über das Flugzeug im Luftraum feststellen, speichern und übermitteln kann,
- ein Wirbelerzeugerinformationssubsystem, das Informationen über Erzeuger der Wirbelschleppen in der Umgebung des Flugzeugs feststellen, speichern und den Benutzern zur Verfügung stellen kann,
- ein Umgebungsinformationssubsystem, das Informationen über den Umgebungszustand im Bereich des Flugzeugs im laufenden und prognostizierten Zeitpunkt festzustellen, zu speichern und den Benutzern zur Verfügung zu stellen gestattet,
- ein Benutzerwarnsubsystem des eventuellen Einflugs in die Wirbelschleppengefährdungszone in der prognostizierten, vom Benutzer vorgegebenen Vorhaltezeit,
- ein Benutzersubsystem, das mindestens Information anderer Subsysteme empfangen, speichern und darstellen sowie ein Signal bilden kann, das den Flugzeugen ein Manöver anweist, das das Ausweichen vor der Wirbelschleppengefährdungszone in der vom Benutzer vorgegebenen Vorhaltezeit nach dem Warnsignal des eventuellen Einflugs in die Wirbelschleppengefährdungszone im prognostizierenden Zeitpunkt gewährleistet, und
- ein Kommunikationssubsystem, das eine Integration der Subsysteme in ein einheitliches, komplexes System gewährleistet.

In dem integrierten Wirbelsicherheitssystem gemäß der Erfindung
- sichert das Informationssubsystem des Flugzeugs den Empfang, die Verarbeitung, das Speichern und die Übergabe an das Benutzerwarnsubsystem von Informationen mindestens über die Konfiguration, die Koordinaten und die Orientierung des Flugzeugs im Trägheitskoordinatensystem, über die Geschwindigkeitsprojektion des Flugzeugs und die Winkelgeschwindigkeitsprojektion im mit dem Flugzeug gekoppelten Koordinatensystem,
- sichert das Wirbelerzeugerinformationssubsystem den Empfang, die Verarbeitung, das Speichern und die Übergabe an den Benutzer von Informationen mindestens über die Art der Wirbelerzeuger, deren Koordinaten und Orientierung, Geschwindigkeits- und Winkelgeschwindigkeitsprojektion im Trägheitskoordinatensystem,
- sichert das Umgebungsinformationssystem den Empfang, die Verarbeitung, das Speichern und die Übergabe an den Benutzer von Informationen mindestens über die Projektion der Windgeschwindigkeit im Trägheitskoordinatensystem in unterschiedlichen Höhen im Lokalisierungsbereich der Wirbelschleppen und über den Turbulenzgrad der Atmosphäre,
- berechnet das Benutzerwarnsubsystem des eventuellen Einflugs in die Wirbelschleppengefährdungszone mindestens die Wirbelschleppenposition und - intensität sowie die gefährlichen Wirbelerzeugerzonen, Bereiche prognostizierender Flugzeugposition im prognostizierenden Zeitpunkt und liefert dem Benutzersubsystem Informationen über einen eventuellen Einflug in die Wirbelschleppengefährdungszonen im prognostizierenden Zeitpunkt,
- sichert das Benutzersubsystem Empfang, Verarbeitung, Speichern und Abbildung Informationen des Warnsubsystems mindestens über Nullabstand des Bereiches prognostozierten Flugzeugpositionen zu der Wirbelschleppengefährdungszone mit Hilfe von Anzeige- und Visualisierungsmitteln und erzeugt ein Signal zur Positionsänderung des Flugfahrzeugs, wobei die Vergrößerung des genannten Abstands gewährleistet wird.

Ferner ist es im Wirbelsicherheitssystem gemäß der Erfindung zweckmäßig, dass
- das Flugzeuginformationssubsystem auf der Basis der Grundausstattung des Flugzeugs und/oder Ausstattung des Boden-, See- und/oder Luft-Raumfahrt-Navigationskomplexes ausgeführt wird,
- das Wirbelerzeugerinformationssubsystem auf Basis der Grundausstattung des Flugzeugs und/oder Grundausstattung des Wirbelerzeugers und/oder der Ausstattung der Flugkontrolle des Boden-, See- und/oder Luft-Raumfahrt-Navigationskomplexes ausgeführt wird,
- das Benutzerwarnsubsystem über den eventuellen Einflug des Flugfahrzeugs in die Wirbelschleppengefährdungszonen aufgrund der Software der Benutzerrechensysteme und/oder der Anzeigebordsysteme und/oder der Anzeigesysteme des Flugsicherungsdienstes bzw. der Ausstattung des Boden-, See- und/oder Luft-Raumfahrt-Navigationskomplexes am Fluglotsenstandort ausgeführt wird,
- das Benutzersubsystem aufgrund der Software der Benutzerrechensysteme und der Visualisierungs- und Anzeigegeräte als Grundausstattung des Flugfahrzeugs und/oder Ausstattung des Boden- oder See-Navigationskomplexes am Fluglotsenstandort ausgeführt wird und
- das Kommunikationssubsystem aufgrund von Telecode-Verbindungen und/oder bordgestützten Multiplexkanälen zum Informationsaustausch ausgeführt wird.

Erfindungsgemäß kann dabei als Benutzer im integrierten Wirbelsicherheitssystem das Flugfahrzeug sein und das Anweisungssignal von der Besatzung bzw. der automatischen Steuerungsanlage des Flugzeugs ausgeführt werden.

Ferner kann als Benutzer im integrierten Wirbelsicherheitssystem gemäß der Erfindung der Flugsicherungsdienst sein, der das Anweisungssignal der Besatzung übermittelt, das von der Besatzung bzw. der automatischen Steuerungsanlage des Flugzeuges ausgeführt wird.

Gemäß der Erfindung ist es dabei sinnvoll, dass das integrierte Wirbelsicherheitssystem als Warnsubsystem des eventuellen Einflugs in die Wirbelschleppengefährdungszone im prognostizierenden Zeitpunkt ein Subsystem enthält, das Folgendes umfasst:
- eine Überwachungseinrichtung der Flugzeugparameter, die Informationen über die Konfiguration, die Position und die Orientierung des Flugfahrzeugs im Trägheitskoordinatensystem im laufenden Zeitpunkt empfangen kann,
- eine Überwachungseinrichtung des Wirbelerzeugers, die Informationen über die Position, die Geometrie- und Massencharakteristik des Wirbelerzeugers im gleichen Koordinatensystem im laufenden Zeitpunkt und über die Parameter der Bewegung des Wirbelerzeugers empfangen kann,
- eine Speichereinrichtung, die Informationen über die Lage und die Bewegungsparameter des Wirbelerzeugers im Trägheitskoordinatensystem abspeichern kann,
- einen Detektor der Umweltparameter, der Informationen über Umweltparameter im gemeinsamen Bereich des Flugfahrzeugs und Wirbelerzeugers im laufenden Zeitpunkt empfangen kann,
- eine Wirbelschleppenüberwachungseinrichtung, die die Wirbelschleppenbahn und -intensität als Bahnengesamtheit der Mittelpunkte von Wirbelbereichen im Trägheitskoordinatensystem bestimmen kann,
- eine Speichereinrichtung, die Informationen über die Koordinaten der Bahnpunkte und die Wirbelschleppenintensität als Bahnengesamtheit der Mittelpunkte von Wirbelbereichen im Trägheitskoordinatensystem abspeichern kann,
- eine Wähleinrichtung der Vorhaltezeit, in der mindestens das Manöver der Flugbahnänderung des Flugzeugs durchgeführt werden kann, das ein Ausweichen des Flugfahrzeugs vor der Wirbelschleppe nach der Warnung vor dem eventuellen Einflug darin gewährleistet,
- eine Simulationseinrichtung der Kontrollfläche, die den Vorhalteabstand, der dem vom Flugzeug in der Vorhaltezeit geflogenen Abstand entspricht, berechnen kann und eine Kontrollfläche, die im Raum vor dem Flugzeug und senkrecht zu seiner Bewegungsrichtung im Vorhalteabstand vor ihm liegt, erstellen und den prognostizierten Zeitpunkt der Überschneidung dieser Kontrollfläche im Trägheitskoordinatensystem bestimmen kann,
- eine Einrichtung zur Bestimmung der Parameter der Gefährdungszone, die die geometrische Charakteristik der Wirbelschleppengefährdungszone als Gesamtheit der Gefährdungszonen der Wirbelbereiche im prognostizierenden Zeitpunkt bestimmen kann,
- eine Prognoseeinrichtung, die die Wirbelschleppenbahn als Bahnengesamtheit der Mittelpunkte von Wirbelbereichen und die Intensität der Wirbelschleppe im Trägheitskoordinatensystem im prognostizierenden Zeitpunkt bestimmen kann,
- eine Recheneinrichtung der Überschneidungspunkte, die die Koordinaten der Überschneidungspunkte der Wirbelschleppenbahn mit der Kontrollfläche im prognostizierten Zeitpunkt der Überschneidung mit der Kontrollfläche berechnen kann,
- eine Einrichtung zur Erstellung von Zonen und Bereichen, die eine Erstellung der Wirbelschleppengefährdungszone um den Überschneidungspunkt der Wirbelschleppenbahn mit der Kontrollfläche als Gesamtheit der Gefährdungszonen von Wirbelbereichen, bei denen eine Überschneidung der Bewegungsparameter des Flugzeuges die zulässige Grenze überschreiten können, eine Erstellung der unter Verwendung festgelegter Normen der Flugdurchführung prognostizierten Flugzeugposition in der prognostizierenden Zeit der Kontrollflächenüberschneidung, eine Erstellung eines Schwerpunktbereichs um den Bereich prognostizierten Flugzeugpositionen und eine Übermittlung der Information über die Überschneidung des Schwerpunktbereichs mit der Wirbelschleppengefährdungszone an den Benutzer gewährleistet;
- einen Übergangsblock, der Koordinaten des Bereichs der prognostizierten Flugzeugpositionen, des Schwerpunktbereichs und der Wirbelschleppengefährdungszone im mit dem Flugzeug gekoppelten Koordinatensystem berechnen kann,
- einen ersten Prüfblock der Überschneidungsbedingungen, der den Abstand vom Schwerpunktbereich zur Wirbelschleppengefährdungszone bestimmen und den Nullabstand festlegen kann,
- einen zweiten Prüfblock der Überschneidungsbedingungen, der den Abstand vom Bereich der prognostizierten Flugzeugpositionen zur Wirbelschleppengefährdungszone bestimmen und den Nullabstand festlegen kann,
- eine erste Signaleinrichtung, die die Bildung und Übermittlung des Signals über den Nullabstand des Schwerpunktbereichs zur Wirbelschleppengefährdungszone an das Benutzersubsystem gewährleistet, und
- eine zweite Signaleinrichtung, die die Bildung und Übermittlung des Alarmsignals über den Nullabstand vom Bereich der prognostizierten Flugzeugpositionen zur Wirbelschleppengefährdungszone an das Benutzersubsystem gewährleistet.

Dabei ist es sinnvoll, dass im integrierten Wirbelsicherheitssystem gemäß der Erfindung
- die Überwachungseinrichtung der Flugzeugparameter Informationen mindestens über die Konfiguration, Koordinaten, Bewegungsgeschwindigkeit, Stampf-, Wind- und Krängungswinkel des Flugzeugs empfangen kann,
- die Überwachungseinrichtung des Wirbelerzeugers Informationen mindestens über den Wirbelerzeugertyp, dessen Bewegungs- und Winkelgeschwindigkeit sowie über die Koordinaten der Bahnpunkte des Wirbelerzeugers empfangen kann,
- der Detektor der Umgebungsparameter Informationen mindestens über Stärke und Richtung der Lokalwindgeschwindigkeit, Windprofil abhängig von der Höhe, Turbulenz und dem Typ der Abschirmfläche empfangen kann,
- die Wirbelschleppenüberwachungseinrichtung Bahn und Intensität der Wirbelschleppe als Bahnengesamtheit der Mittelpunkte von Wirbelbereichen aus gespeicherten Daten über den Typ des Wirbelschleppenerzeugers, die Koordinaten seiner Bahnpunkte und die Bewegungs- und Winkelgeschwindigkeit bestimmen kann,
- die Simulationseinrichtung eine Kontrollfläche aus Daten über die Position, Orientierung, Bewegungsgeschwindigkeit des Flugfahrzeugs und die Vorhaltezeit simulieren kann,
- die Einrichtung zur Bestimmung der Gefährdungszonenparameter die geometrische Charakteristik der Wirbelschleppengefährdungszone aus gespeicherten Daten über die Koordinaten der Bahnpunkte und die Intensität der Wirbelschleppe, Konfiguration, Position, Bewegungs- und Winkelgeschwindigkeit des Flugzeugs im Trägheitskoordinatensystem bestimmen kann,
- die Prognoseeinrichtung die Bahn der erzeugten Wirbelschleppe und ihre Intensität aus Daten über die Wirbelschleppenbahn und intensität als Bahnengesamtheit der Mittelpunkte von Wirbelbereichen im Trägheitskoordinatensystem bestimmen kann,
- die Recheneinrichtung der Überschneidungspunkte die Koordinaten der Überschneidungspunkte der Wirbelschleppenbahn mit der Kontrollfläche aus Daten über die Koordinaten der Kontrollfläche und die Bahn der Wirbelschleppe im Trägheitskoordinatensystem im prognostizierten Zeitpunkt berechnen kann,
- die Einrichtung zur Erstellung von Zonen und Bereichen der Wirbelschleppengefährdungszone, von Bereichen der prognostizierten Flugzeugpositionen und den Schwerpunktbereich aus Daten über die Koordinaten der Überschneidungspunkte der Wirbelschleppe im prognostizierten Zeitpunkt, aus Daten über die geometrische Charakteristik der Gefährdungszone als Gesamtheit der Gefährdungszonen der Wirbelbereiche und aus Daten über die Konfiguration, Position, Orientierung und Bewegungs- und Winkelgeschwindigkeit des Flugzeugs unter Verwendung der für die Flugdurchführung festgelegten Normen im Trägheitskoordinatensystem erstellen kann und
- der Übergangsblock die Koordinaten des Bereichs der prognostizierten Flugzeugpositionen, des Schwerpunktbereichs und der Wirbelschleppengefährdungszone im mit dem Flugzeug gekoppelten Koordinatensystem aus Daten über die Koordinaten des Schwerpunktbereichs und der Wirbelschleppengefährdungszone im prognostizierenden Zeitpunkt im Trägheitskoordinatensystem und aus Daten über die Konfiguration, Koordinaten des Flugfahrzeuges und dessen Position sowie vorzugsweise über die Stampf-, Wind- und Krängungswinkel im Trägheitskoordinatensystem im laufenden Zeitpunkt berechnen kann.

Ferner ist es sinnvoll, dass im integrierten Wirbelsicherheitssystem gemäß der Erfindung das Warnsubsystem eine Wirbelerzeugerüberwachungseinrichtung, eine Speichereinrichtung, eine Wirbelschleppenüberwachungseinrichtung, eine Einrichtung zur Bestimmung der Parameter der Gefährdungszone, eine Prognoseeinrichtung, eine Recheneinrichtung der Überschneidungspunkte, eine Einrichtung zur Erstellung von Zonen und Bereichen, einen Übergangsblock, zwei Prüfblöcke der Überschneidungsbedingung und Signaleinrichtungen, die eine simultane Funktionsweise in Bezug auf jeden einzelnen, in der Umgebung des Flugfahrzeuges befindlichen Wirbelerzeuger gewährleisten, aufweist.

Dabei ist es wünschenswert, dass im integrierten Wirbelsicherheitssystem gemäß der Erfindung die Wähleinrichtung der Vorhaltezeit mit der Möglichkeit einer laufenden Korrektur der Vorhaltezeit im Warnsubsystem ausgeführt wird.

Darüber hinaus ist es wünschenswert, dass im Warnsubsystem des integrierten Wirbelsicherheitssystems gemäß der Erfindung die Einrichtung zur Erstellung von Zonen und Bereichen mit der Möglichkeit einer laufenden Korrektur der Koordinaten des Bereichs der prognostizierten Flugzeugpositionen ausgeführt wird.

Ferner ist es wünschenswert, dass im Warnsubsystem des integrierten Wirbelsicherheitssystems gemäß der Erfindung die Einrichtung zur Erstellung von Zonen und Bereichen mit der Möglichkeit einer laufenden Korrektur der Koordinaten des Schwerpunktbereichs ausgeführt wird.

Dabei ist es gemäß der Erfindung wünschenswert, dass die laufende Korrektur der Vorhaltezeit, Koordinaten des Bereichs der prognostizierten Flugzeugpositionen und des Schwerpunktbereichs von Hand eingestellt werden kann.

Ferner ist es gemäß der Erfindung sinnvoll, dass die vorstehend erwähnte Korrektur auch halb- und vollautomatisch eingestellt werden kann.

Darüber hinaus ist es zweckmäßig, dass das Benutzersubsystem eine Einrichtung zur Visualisierung der Information über die Lage des Bereichs der prognostizierten Flugzeugpositionen und der Wirbelschleppengefährdungszonen auf der Kontrollfläche enthält.

Ferner ist es wünschenswert, dass im integrierten Sicherheitssystem das Benutzersubsystem eine Anzeige- und Alarmanzeigeeinrichtung umfasst, die aus der Gruppe gewählt wird, die Vorrichtungen zur visuellen, akustischen und Tastenanzeige einschaltet.

Dabei ist es sinnvoll, dass im integrierten Wirbelsicherheitssystem gemäß der Erfindung das Warnsubsystem als Einrichtung zur Bestimmung der Parameter der Wirbelschleppengefährdungszone eine Einrichtung enthält, die Folgendes umfasst:
- einen Schematisierungsblock des Flugfahrzeugs, der alle geometrischen Flugzeugcharakteristiken berechnen kann, die für die Berechnung der auf das Flugzeug wirkenden, wirbelinduzierenden Zusatzkräfte und -momente erforderlich sind,
- einen Block zur Bestimmung der im vorgegebenen Raumpunkt auf das Flugzeug wirkenden, wirbelinduzierenden Zusatzkräfte und -momente, der diese aus gespeicherten Koordinaten der Bahnenpunkte der Wirbelmittelpunkte und Wirbelintensität als Bahnengesamtheit der Mittelpunkte von Wirbelbereichen im Trägheitskoordinatensystem und aus der Konfiguration, Position, Bewegungs- und Winkelgeschwindigkeit des Flugzeugs im Trägheitskoordinatensystem sowie aus der geometrischen Charakteristik des Flugzugs berechnen kann,
- einen Block zur Bestimmung des Gefährdungspotentials der Wirbelströme im vorgegebenen Raumpunkt, der die Gefährdung der Wirbelströme nach einem vom Benutzer vorgegebenen Kriterium auswerten kann,
- einen Block zur Bestimmung der Menge von Raumpunkten, in denen die wirbelinduzierenden Zusatzkräfte und -momente gefährlich sind, und der Koordinaten der in der Gefährdungszone liegenden Raumpunkte durch Auswahl nach einem vom Benutzer vorgegebenen Gefährdungskriterium bestimmen kann,
- einen Block zur Bestimmung der geometrischen Charakteristik der Wirbelschleppengefährdungszone, der diese aus Koordinaten der in der Gefährdungszone liegenden Punkte berechnen kann.

Dabei kann der Block zur Bestimmung der geometrischen Charakteristik der Wirbelgefährdungszone in der Einrichtung zur Bestimmung der Gefährdungszonenparameter des integrierten Wirbelsicherheitssystems gemäß der Erfindung die Gefährdungsschwelle anpassen.

Es ist dabei zweckmäßig, dass im integrierten Wirbelsicherheitssystem gemäß der Erfindung ein zulässiger Krängungswert des Flugzeugs als Gefährdungskriterium der Wirbelschleppe ausgewählt wird.

Ferner kann im integrierten Wirbelsicherheitssystem gemäß der Erfindung der wirbelinduzierende Krängungsmoment als Kriterium der Wirbelschleppengefährdung ausgewählt werden.

Gemäß der Erfindung ist es dabei sinnvoll, dass im Warnsubsystem des integrierten Wirbelsicherheitssystems die Wirbelschleppenüberwachungseinrichtung und die Prognoseeinrichtung eine programmierbare Komponente enthalten und die Einrichtung zur Bestimmung der Gefährdungszonenparameter in der Software der programmierbaren Komponente gebildet wird.

Dabei können die Einrichtungen und Blöcke des Warn- und Benutzersubsystems im integrierten Wirbelsicherheitssystem gemäß der Erfindung unterschiedliche Standorte aufweisen.

Darüber hinaus kann das integrierte Wirbelsicherheitssystem gemäß der Erfindung ein Speichersystem im Benutzersubsystem enthalten, das mindestens eine Information des Warnsystems über die Vorhaltezeit, Koordinaten der Kontrollfläche, des Bereiches der prognostizierenden Flugzeugpositionen und der Wirbelschleppengefährdungszonen mindestens im Laufe der Alarmanzeigezeit des Nullabstands des Bereichs der prognostizierenden Flugzeugpositionen zur Wirbelgefährdungszone abspeichert.

### Kurzbeschreibung der Zeichnungen

Die Erfindung wird nun anhand von Ausführungsbeispielen und Zeichnungen näher erläutert, die zeigen:
- Fig. 1: ein beispielhaftes Blockschaltbild von Informationsflüssen des integrier- ten Wirbelsicherheitssystems gemäß der Erfindung,
- Fig. 2: ein Blockschaltbild als Ausführungsbeispiel des Warnsubsystems über einen eventuellen Einflug in die Wirbelschleppengefährdungszone in Zusammenwirkung mit einem Teil des Benutzersubsystems,
- Fig. 3: ein beispielhaftes Blockschaltbild der Einrichtung zur Bestimmung der geometrischen Charakteristik der Wirbelgefährdungszone,
- Fig. 4: ein schematisches Ausführungsbeispiel des integrierten Wirbelsicher- heitssystems gemäß der Erfindung und
- Fig. 5: eine beispielhafte, schematische Darstellung der Information, die im Benutzersubsystem gemäß der Erfindung visualisiert wird.

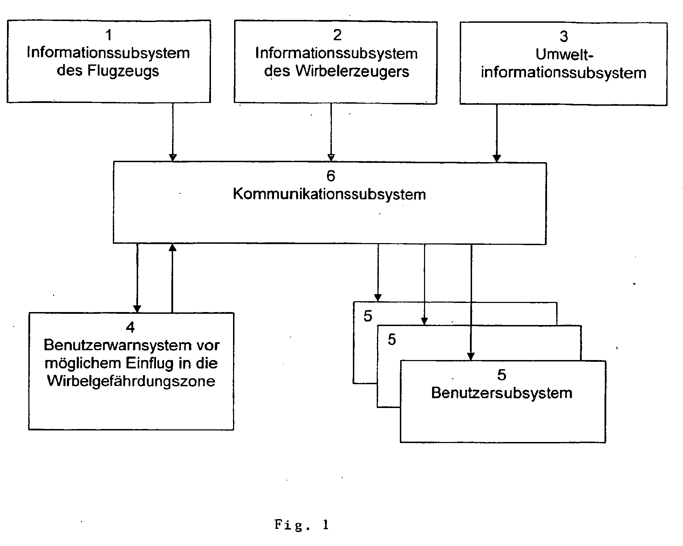

Die Erfindung kann durch ein sich nicht beschränkendes Ausführungsbeispiel erläutert werden, dessen Blockschaltbild in Fig.1 für den Fall dargestellt ist, dass der Benutzer ein fliegendes Flugzeug in der Terminal-Bereich ist und in seiner Umgebung ein anderes, wirbelerzeugendes Flugzeug fliegt. Dabei ist das Flugzeug mit einem Navigationskomplex ausgestattet, der Flugparameter des eigenen Flugzeugs und anderer Objekte misst und die einander ergänzende und korrigierende Subsysteme, nämlich Funksysteme der Nah- und Fernnavigation, ein Funkfeuersystem, ein Satellitennavigationssystem, ein Doppler-System zur Messung der Weggeschwindigkeit und des Abweichungswinkels, ein Trägheitssystem, ein Radarsystem, ein optoelektronisches System, einen Laser-Entfernungsmesser, einen Funkhöhenmesser, ein Luftdatensystem, Sensoren der Angriffs- und Gleitwinkel, der Überladung und der Winkelgeschwindigkeit, eine Kreiselvertikale, ein Interflugnavigationssystem und ein Bordanzeigesystem, umfasst sowie ein Rechensystem, Anzeige-, Signal- und Visualisierungsmittel, beispielsweise ein Anzeigegerät auf der Vorderseite und/oder auf dem Display, enthält.

Die Navigationsausstattung des Flughafens stellt beispielsweise einen Komplex dar, der ein internationales Funksystem zur Nahnavigation, wie VOR/DME (VOR ist ein Azimutfunkfeuer, DME ist ein Weitefunkfeuer), das eine Grundausstattung für die Sicherheit im internationalen Flugverkehr ist und kontinuierlich die Position des Flugzeugs misst (Reichweite bis 370 km, Wirkungszone 0-40°), einen automatischen Funkpeiler zur Azimutanzeige des Flugzeugs Typ AΠP-7C und eine angetriebene Funkstation, beispielsweise vom Typ AΠP-8, die zur Flugsicherheit des mit einem Funkkompass ausgestatteten Flugzeuges bestimmt ist, umfasst.

In Fig. 1 ist ein Blockschaltbild der Informationsflüsse des integrierten Sicherheitssystems gemäß der Erfindung als ein Ausführungsbeispiel dargestellt. Im Beispiel werden ein Flugzeuginformationssubsystem 1, ein Wirbelerzeugerinformationssubsystem 2 und ein Umgebungsinformationssubsystem in dem genannten Navigationskomplex und teilweise auf der Basis der Bodenstation des Flughafens ausgeführt. Sie fixieren, speichern und übermitteln an andere Subsysteme des integrierten Sicherheitssystems gemäß der Erfindung Informationen über die Angriffs- und Gleitwinkel, Winkelgeschwindigkeit der Flugzeugrotation um die Koordinatenachsen, über die Abweichung der Lenkungsorgane, Arbeitsbedingungen der Motoren, Überladung längs der Koordinatenachsen, Orientierungswinkel des Flugzeugs im Koordinatensystem, Informationen über die Flugzeugkonfiguration, Gerätegeschwindigkeit, Beschleunigung, Orientierungswinkel des Geschwindigkeitsvektors im Trägheitskoordinatensystem, Koordinaten der Flugzeugposition im Raum, Radarinformationen über meteorologische Situation, den Typ der Abschirmfläche, die Wirbelerzeugerposition im Raum sowie die von der Bodenstationen des Flughafens funkübermittelten Information, beispielsweise über die Position anderer Wirbelerzeuger, deren Form und Abmessung, Geschwindigkeit und Orientierung, Windprofil abhängig von der Höhe, Wirbelerzeugertyp, Koordinaten der Bahnpunkte und die geometrische und Massencharakteristik dieser Wirbelerzeuger.

Das Benutzerwarnsubsystem 4 des eventuellen Einflugs in die Wirbelschleppengefährdungszone wird aufgrund des Navigationskomplexes und Rechensystems des Flugzeugs ausgeführt; das Benutzersubsystem 5 wird auf der Basis des Rechensystems des Flugzeugs, der Datenanzeige- und Visualisierungseinrichtung, beispielsweise eines Anzeigegerätes auf der Vorderseite und/oder auf dem Display, ausgeführt; das Kommunikationssubsystem 6 wird auf der Basis von Multiplexkanälen zum Informationsaustausch an Bord ausgeführt.

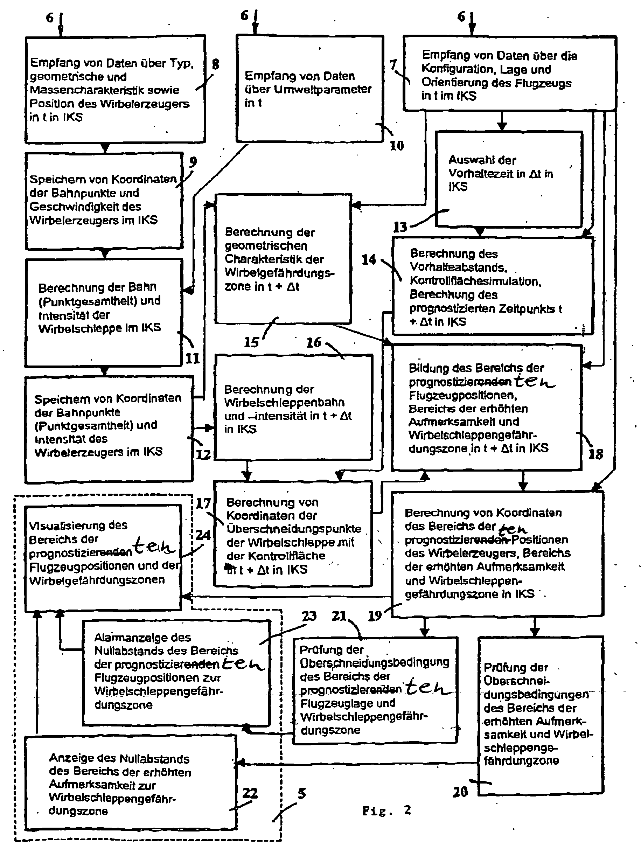

Gemäß der Erfindung werden das Benutzerwarnsubsystem 4 und ein Teil des Benutzersystems 5, das ein Visualisierungssystem enthält, nach dem Blockschaltbild in Fig. 2 ausgeführt. Das Warnsubsystem 4 errechnet aufgrund der von den Subsystemen 1, 2 und 3 gelieferten Daten die Bahn der in der Flugzeugumgebung befindlichen Wirbelschleppen als Gesamtheit der Bahnpunkte der Mittelpunkte von Wirbelbereichen im Raum, bestimmt die geometrische Charakteristik der Wirbelschleppenzone, die das von dem Benutzer vorgegebene Gefährdungskriterium erfüllt, beispielsweise den Krängungswinkel des Flugzeugs unter der prognostizierenden Wirkung der Wirbelschleppe im prognostizierten Zeitpunkt der Überschneidung einer gewissen, simulierten Kontrollfläche, die im umgebenden Raum vor dem Flugzeug senkrecht zu seiner Bewegungsrichtung im Vorhalteabstand vom Flugzeug liegt, bildet auf der Kontrollfläche Daten über die prognostizierte, gegenseitige Position des Flugzeuges und der Wirbelgefährdungszonen, bestimmt das Gefährdungspotential für das Flugzeug und überwacht laufend den Abstand zwischen der Gefährdungszone und dem Flugzeug.

Das Benutzersubsystem 5 informiert den Piloten über den prognostizierten Einflug in die Gefährdungszone mittels einer akustischen, visuellen und Tastenanzeige und sichert die Visualisierung dieser Daten für den Benutzer, wobei es ein Anweisungssignal, beispielsweise ein akustisches Signal, bildet. Ist das Benutzersubsystem 5 auch noch am Lotsenstandort angeordnet, wird es dem Lotsen möglich, seine Aufmerksamkeit auf die Lösung der vorgefundenen Situation zu konzentrieren.

Gemäß dem Blockschaltbild in Fig. 2 empfängt eine Überwachungseinrichtung 7 der Flugzeugparameter im beschriebenen Subsystem 4 Daten vom Flugzeugsubsystem 1, insbesondere über die Konfiguration, Koordinaten, Bewegungs- und Winkelgeschwindigkeit des Flugzeugs und die Stampf-, Wind- und Krängungswinkel im laufenden Zeitpunkt *t* im Trägheitskoordinatensystem (IKS), über das Kommunikationssubsystem 6.

Eine Wirbelerzeugerüberwachungseinrichtung 8 empfängt Daten vom Wirbelerzeugerinformationssubsystem 2 über das Kommunikationssubsystem 6, und eine Speichereinrichtung 9 speichert diese Daten über den Typ des Wirbelerzeugers, dessen Bewegungsgeschwindigkeit, Winkelgeschwindigkeit und Koordinaten der Bahnpunkte des Wirbelerzeugers im IKS ab.

Ein Detektor 10 der Umgebungsparameter empfängt vom Umgebungsinformationssubsystem 3, beispielsweise vom Luftdatensystem bzw. vom Fluglotsen, über das Kommunikationssubsystem 6 Daten über die Größe und Richtung der Lokalwindgeschwindigkeit, des Windprofils abhängig von der Höhe, Turbulenz und dem Typ der Abschirmfläche im gemeinsamen Gebiet des Flugzeugs und des Wirbelerzeugers im IKS im laufenden Zeitpunkt *t*.

Die Wirbelschleppenüberwachungseinrichtung 11 errechnet aufgrund von Daten aus der Speichereinrichtung 9 die Wirbelschleppenbahn und -intensität als Bahnengesamtheit der Mittelpunkte von Wirbelbereichen im IKS, beispielsweise mittels eines Algorithmus, der ein Know-how-Objekt der Erfinder ist, bzw. mittels des bekannten Algorithmus zur Berechnung der Wirbelschleppenbahn und -intensität (Northwest Research Associates, Inc., Aircraft Vortex Spacing System [AVOSS], Algorithm Version 3.1.1), der die Berechnung der Koordinaten der Wirbelmittelpunkte durch Integration einer Differentialgleichung durchführt und die Ausbreitung und Alterung der Wirbelbereiche im Raum und in der Zeit beschreibt, sowie mittels anderer Algorithmen, die solche Berechnungen gewährleisten. Eine Speichereinrichtung 12 speichert diese Daten ab. Die Parameter der Koordinaten von Wirbelbereichen können auch messtechnisch, beispielsweise mittels eines Lidars, und mittels Messung und Auswertung der Tangentialgeschwindigkeit der Luftströmung mit nachfolgender Berechnung der Wirbelschleppenbahn und -intensität bestimmt werden. Eine Einrichtung 13 wählt die Vorhaltezeit aus, die für die Manöverdurchführung zur Bahnänderung des Flugzeugs erforderlich ist. Diese Vorhaltezeit kann erfindungsgemäß laufend mittels einer Einstellung von Hand, einer halb- bzw. vollautomatischen Einstellung, beispielsweise unter Berücksichtigung der Pilotenqualifikation bzw. Besonderheiten der gestellten Aufgabe, korrigiert werden. Eine Simulationseinrichtung 14 der Kontrollfläche simuliert unter Benutzung der Daten über die Koordinaten, Bewegungsgeschwindigkeit, Stampf-, Wind- und Krängungswinkel des Flugzeugs von der Einrichtung 7 und Daten über die gewählte Vorhaltezeit Δ *t* von der Einrichtung 13 eine Kontrollfläche, die im Raum vor dem Flugzeug und senkrecht zu seiner Bewegungsrichtung im berechneten Vorbehaltabstand zum Flugzeug liegt, beispielsweise in Form von Faktoren der Flächengleichung der Kontrollfläche im IKS, und bestimmt den prognostizierenden Zeitpunkt *t* + Δ*t* der Überschneidung der Kontrollfläche im IKS. Als Simulationseinrichtung 14 kann jede Recheneinrichtung, die solche Berechnungen erlaubt, beispielsweise ein Bordrechner, eingesetzt werden. Eine Prognoseeinrichtung 15 errechnet aufgrund der in der Einrichtung 12 gespeicherten Daten über die Wirbelschleppenbahn und -intensität sowie über den prognostizierten Zeitpunkt aus der Simulationseinrichtung 14 die Koordinaten der Wirbelschleppenbahn und -intensität als Gesamtheit der Bahnen von Wirbelmittelpunkten im prognostizieten Zeitpunkt im IKS. Eine Einrichtung 16 zur Parameterbestimmung der Gefährdungszone bestimmt aufgrund von Daten über die Koordinaten, Bewegungs- und Winkelgeschwindigkeit des Flugzeuges von der Einrichtung 7 und aufgrund von Daten über die Koordinaten der Punkte der Wirbelschleppenbahn und -intensität als Gesamtheit der Bahnen der Wirbelmittelpunkte von der Einrichtung 12 die geometrische Charakteristik der Wirbelgefährdungszone als Gesamtheit der Wirbelgefährdungszonen im prognostizierten Zeitpunkt *t* + Δt in Übereinstimmung mit den ausgewählten Gefährdungskriterien. Als Gefährdungskriterium kann dabei gemäß der Erfindung ein zulässiger Krängungswinkel des Flugzeugs bzw. ein wirbelinduzierender, zulässiger Krängungsmoment ausgewählt werden.

Die Wirbelschleppenüberwachungseinrichtung 11 und Prognoseeinrichtung 15 können erfindungsgemäß eine programmierbare Komponente, beispielsweise die Wirbelschleppenbahn und -intensität, enthalten und die Einrichtung 16 kann in der Software dieser Komponente ausgeführt werden, beispielsweise in der Datenbank für die berechneten, geometrischen Charakteristiken der Wirbelgefährdungszonen unterschiedlicher Erzeugertypen in Abhängigkeit von unterschiedlichen Bedingungen der Umgebung und Bewegungsparameter des Wirbelerzeugers, der wirbelinduzierenden Kräfte und Momente, beispielsweise der Krängungsmomente.

Eine Einrichtung 17 (Fig. 2), die beispielsweise im Rechner des Navigationssystems an Bord ausgeführt wird, errechnet aus Daten über die Koordinaten der Kontrollfläche Koordinaten der Überschneidungspunkte der Wirbelschleppenbahn mit der Kontrollfläche im prognostizierten Zeitpunkt *t* + Δ*t* aus der Einrichtung 14 und Daten über die Wirbelschleppenbahn aus der Einrichtung 15 mittels einer Auswahl der auf beiden Seiten der Kontrollfläche liegenden Punkte der Wirbelschleppenbahn mit Interpolation des Abstands dazwischen.

Eine Einrichtung 18 zur Erstellung von Zonen und Bereichen, beispielsweise als Rechnerbestandteil des Navigationsträgheitssystems an Bord des Flugzeuges, erstellt um den Überschneidungspunkt der Wirbelschleppenbahn mit der Kontrollfläche eine Wirbelgefährdungszone, einen Bereich prognostizierten Flugzeugpositionen unter Benutzung der vorgeschriebenen Flugdurchführungsnormen im prognostizieten Zeitpunkt *t* + Δ*t* und einen Schwerpunktbereich als Gesamtheit der Punktmenge auf der Kontrollfläche. Gemäß der Erfindung ermöglicht die Einrichtung 12 eine laufende Korrektur der Koordinaten des Bereichs der prognostizierenden Flugzeugpositionen und des Schwerpunktbereichs vorzunehmen, was für den Piloten für die Koordinierung des Ausweichmanövers und der Flugaufgabe wichtig ist.

Ein Übergangsblock 19 errechnet die Koordinaten des Bereichs der prognostizierten Flugzeugpositionen, der Wirbelgefährdungszone und des Schwerpunktbereiches im mit dem Flugzeug gekoppelten Koordinatensystem.

Danach errechnet ein erster Prüfblock 20 der Überschneidungsbedingungen den Abstand vom Schwerpunktbereich zur Wirbelgefährdungszone, wobei der Nullabstand überwacht wird, und der zweite Block 21 errechnet den Abstand von dem Bereich der prognostizierenden Flugzeugpositionen zur Wirbelgefährdungszone, wobei der Nullabstand überwacht wird.

Daten über den Nullabstand im prognostizierenden Zeitpunkt werden in das Benutzersubsystem 5 in Anzeigeeinrichtungen 22 und 23, beispielsweise in die Einrichtung 22 zur Audioanzeige, wenn der Abstand zwischen dem Schwerpunktbereich und der Wirbelgefährdungszone Null ist, und danach beispielsweise in die Einrichtung 23 zur Tastenalarmanzeige, wenn der Abstand zwischen dem Bereich der prognostizierten Flugzeugpositionen und der Wirbelgefährdungszone Null ist, übermittelt. Die Tastenanzeige soll den Piloten zum eiligen Treffen von Maßnahmen veranlassen, um ein Ausweichmanöver vor der Gefährdungszone durchzuführen. Der Pilot verfügt dabei über Zeit zum Manövrieren, die von der Simulationseinrichtung 14 der Kontrollfläche mit der Erfassung der Bewegungsgeschwindigkeit des Flugzeugs und des Vorhalteabstands errechnet wird. In Abhängigkeit von der Situation kann die Vorhaltezeit nach dem Signal der ersten Anzeige aus der Einrichtung 22 von dem Piloten korrigiert werden, beispielsweise mittels einer Einstellung von Hand zur Festsetzung eines diskreten Werts, mittels einer halbautomatischer Einstellung zum Übergang auf einen anderen Wert oder mittels einer vollautomatischer Einstellung, bei der das Änderungskriterium, beispielsweise die Zeitvergrößerung bzw. -verkleinerung, eingestellt wird. Bei der Vergrößerung der genannten Abstände hört die Anzeige auf.

Es ist sinnvoll, für den Benutzer Daten über die gegenseitige Position des Bereichs der prognostizierten Flugzeugpositionen und der Gefährdungszone auf der Kontrollfläche im prognostizierten Zeitpunkt mittels einer Visualisierungseinrichtung 24, beispielsweise auf dem Display, auf der Anzeige auf der Vorderseite oder in der Ortungskarte des Flugzeugs, sichtbar zu machen und die Position der Gefährdungszonen erst nach ihrer Überschneidung mit dem Schwerpunktbereich anzuzeigen, um die für den Piloten nicht aktuellen Daten auszuschließen.

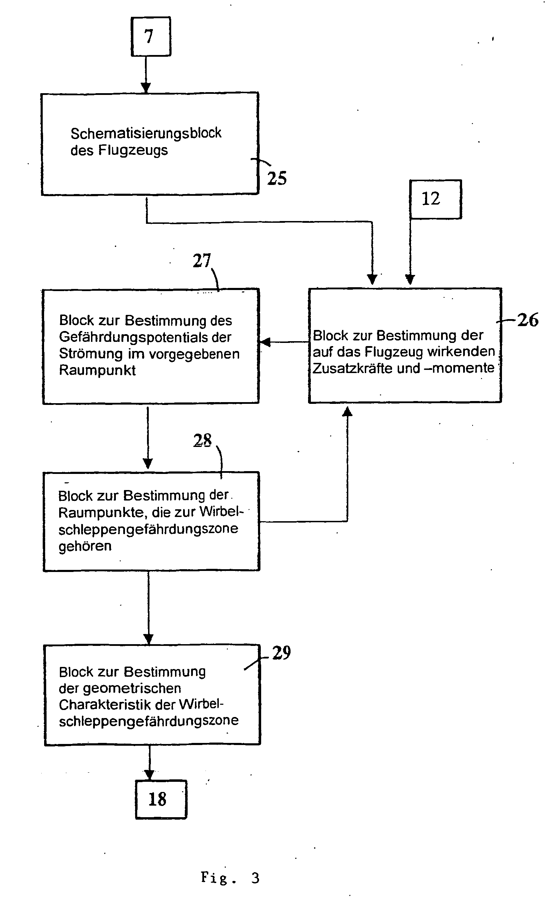

Die Einrichtung 16 zur Bestimmung der Gefährdungszonenparameter kann gemäß der Erfindung so ausgeführt werden, wie es aus dem Blockschaltbild der Fig. 3 ersichtlich ist, und enthält einen Schematisierungsblock 25 in bekannter Ausführung, der die Information von der Einrichtung 7 des Warnsubsystems 4 empfängt und alle geometrischen Flugzeugcharakteristiken mit der Erfassung der Flugzeugkonfiguration errechnet, einen Block 26, der Informationen vom Block 25 und von der Einrichtung 12 des Warnsubsystems 4 empfängt und wirbelinduzierende Zusatzkräfte und - momente im Raumpunkt bestimmt. Dann bestimmt ein Block 27 aufgrund eines vorgegebenen Gefährdungskriteriums das Wirbelgefährdungspotential im vorgegebenen Raumpunkt. Ein Block 28 bestimmt die der Wirbelgefährdungszone angehörigen Raumpunkte, und ein Block 29 bestimmt die geometrische Charakteristik der Gefährdungszone als Gesamtheit der Punkte und passt die Gefährdungsschwelle zur Vereinfachung der Gefährdungszonenvisualisierung auf dem Display an. Daten über die Parameter der Gefährdungszone werden dann in die Einrichtung 18 des Warnsystems übermittelt und im Fall des Einflugs in die Wirbelzone angezeigt.

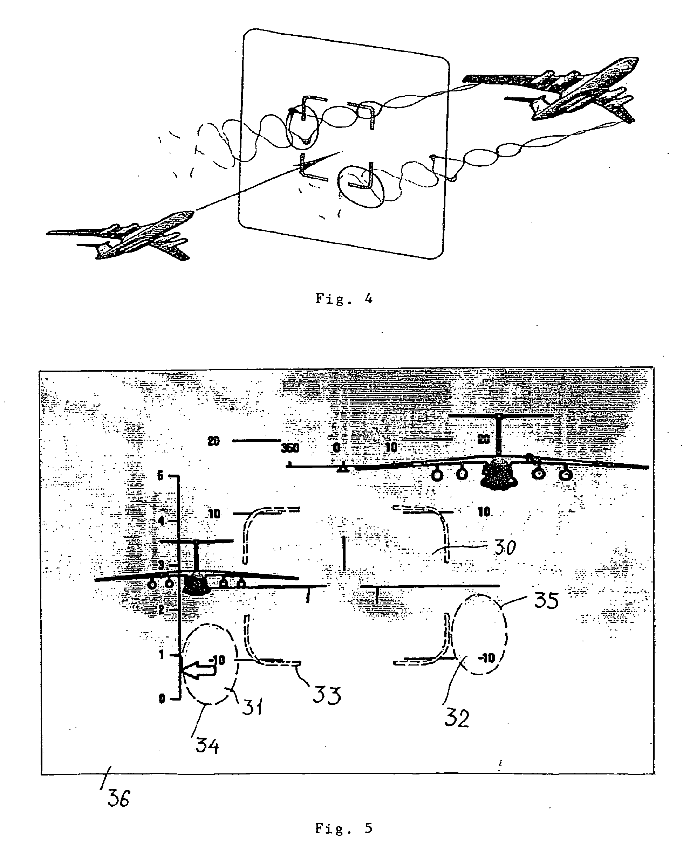

In Fig. 4 wird schematisch die Position der Wirbelschleppen und der Kontrollfläche, die in dem an Bord befindlichen Benutzerwarnsubsystem 4 simuliert wird, dargestellt. Das Subsystem 4 kann aber am Lotsenstandort beispielsweise im Flughafen oder am Schiff angeordnet sein, und dem Piloten werden dann nur die mittels Bordeinrichtungen angezeigten Daten zur Verfügung gestellt.

In Fig. 5 sind schematisch Daten dargestellt, die auf dem Display der Ortungskarte, die zur Kursanzeige und Abbildung der von dem Navigationsträgheitssystem erzeugten Symbole, beispielsweise Airborne Inertial Navigation System (AINS), eingesetzt wird, angezeigt werden und einen Bereich 30 von prognostizierten Flugzeugpositionen und Wirbelgefährdungszonen 31, 32 im Raum im prognostizierten Zeitpunkt anzeigen. Der Bereich 30 kann beispielsweise die Form eines Rechtecks aufweisen, dessen Größe den Abmessungen des Bereichs einer eventuellen Flugzeugposition im Raum proportional ist. Die Grenzen eines Schwerpunktbereichs 36 sind auf dem Display nicht angezeigt, da es gemäß der Erfindung sinnvoll ist, die Abbildung der Wirbelgefährdungszonen mit gleichzeitiger Anzeige, beispielsweise der visuellen Anzeige, auf dem Display erst dann zu projizieren, wenn die Gefährdungszonen 31, 32 einen Schwerpunktbereich 33 überschneiden. Die Gefährdungszonen 31, 32 können beispielsweise die Form eines Kreises oder einer anderen geometrischen Figur für eine bequeme, visuelle Aufnahme haben. Dabei kann die visuelle Anzeige von Bereichen oder Grenzen 33, 34, 35, des Bereichs 30 und der Wirbelgefährdungszonen 31, 32 beispielsweise durch eine Licht- oder Farbanzeige begleitet werden.

Gemäß der Erfindung ist es zweckmäßig, die laufenden Daten über die ausgewählte Vorhaltezeit, Koordinaten der Kontrollfläche und den Bereich der prognostizierten Flugzeugpositionen und Wirbelgefährdungszonen im Laufe der Alarmanzeige des Nullabstands vom Bereich der prognostizierten Flugzeugpositionen zur Wirbelgefährdungszone abzuspeichern. Die Abspeicherung kann beispielsweise mit Hilfe einer separaten Datenspeichereinrichtung (in den Figuren nicht dargestellt) gewährleistet werden, die beispielsweise sowohl an Bord als Bestandteil des Flugschreibers (der so genannten Blackbox) als auch in den boden-, see- und satellitengestützten Systemen der Flugkontrolle angeordnet sind. Eine solche Datenverfügbarkeit ermöglicht, die Ursachen eines Flugzeugunglücks festzustellen, um Pilotenhandlungen in derjenigen Situation zu bewerten, in der der Einflug in die Wirbelschleppengefährdungszone, beispielsweise zur Änderung der Flugzeugkonfiguration oder Flugbahn, hätte führen können.

Obwohl in dem beschriebenen Beispiel nur einer der Wirbelerzeuger dargestellt und das Verhalten nur einer Wirbelgefährdungszone angezeigt und induziert wird, werden selbstverständlich alle Wirbelerzeuger, die sich in dem das Flugzeug umgebenden Raum befinden, erfasst, ihre Wirbelschleppen messtechnisch überwacht und auf dem Display nur diejenigen Wirbelschleppengefährdungszonen abgebildet, die für das Flugzeug eine mögliche Gefahr darstellen. Dabei kann der Pilot aufgrund der Bewertung der schematisch abgebildeten Position möglicher Gefährdungszonen eine angemessene Entscheidung über das Manöver treffen, um vor Wirbelgefährdungszonen auszuweichen.

Das Warnsubsystem 4 des eventuellen Einflugs in die Wirbelgefährdungszone kann gemäß der Erfindung mit Hilfe einer bord- und bodengestützten Grundausstattung, beispielsweise mit einem Navigationsträgheitssystem an Bord (Airborne Inertial Navigation System (AINS), Air Data Computer System (ADS), Doppler- System (DS), Forward View Radar (FVR) und unter Benutzung von Daten, die von der Air Traffic Control (ATC), vom United Indication System (UIS), von Multiplexkanälen zum Datenaustausch (Information Exchange Multiplex Channel (IEMC) übermittel werden, sowie Daten von Systemen, die mit den genannten Informationssystemen kompatibel sind und in anderen ausländischen Flugzeugen eingesetzt werden, beispielsweise in den amerikanischen Systemen Collision Avoidance System (TCAS) und Traffic Alert, ausgeführt werden.

Darüber hinaus können die Einrichtungen des integrierten Wirbelsicherheitssystem gemäß der Erfindung in unterschiedlichen Objekten des Systems der Flugverkehrslenkung oder des Flugzeugs und des Wirbelerzeugers angeordnet sein, wobei der Benutzer Informationen über die Ergebnisse der Berechnungen mittels einer Anzeige und einer Visualisierung erhält. Dabei können als Benutzer dieser Information sowohl die Besatzung eines Flugzeugs als auch die Lotsen eines Flughafens oder eines Schiffes sein, die der Besatzung Anweisungen über die empfohlene Flugbahn oder das erforderliche Manöver des Flugzeugs geben, um gefährliche Situationen auszuschließen, wobei dies eine große Bedeutung bei schlechter Sichtweite und schlechten, meteorologischen Bedingungen hat.

Für die Fachleute im Flugwesen sollte es klar sein, dass das integrierte Wirbelsicherheitssystem gemäß der Erfindung einen komplexen Ansatz zur Problemlösung der Flugsicherheit realisiert und sowohl in der Flugsituation als auch beim Sink- oder Steigflug anwendbar ist.

Dabei kann das Benutzersubsystem, das sowohl an Bord als auch am Lotsenstandort angeordnet ist, eine laufende Korrektur der dem Lotsen zur Verfügung stehenden Information über die Wirbelsituation im Lande- und Startbereich gewährleisten, so dass es möglich ist, nicht nur die Lande- und Startsicherheit zu erhöhen, sondern auch den Sicherheitsabstand zwischen den landenden und startenden Flugzeugen zu vermindern.

Ferner ermöglicht der Einsatz des integrierten Sicherheitssystems gemäß der Erfindung, die Belastung der Lotsen bei Anweisungen der Piloten zu senken, da die Verantwortung des Treffens von Entscheidungen über das Ausweichmanöver vor Wirbelgefährdungszone beim Piloten liegt, und die das Treffen der Entscheidung erleichternde, zusätzliche Information zur Verfügung zu stellen. Dabei muss berücksichtigt werden, dass der Pilot auch heutzutage ohne das integrierte Sicherheitssystem gemäß der Erfindung immer eine Entscheidung zu treffen hat, ohne eine Information über die Position der Wirbelgefährdungszonen verwenden zu können.

Für die Fachleute im Flugwesen und in der Luftfahrtelektronik sollte es klar sein, dass in das integrierte Wirbelsicherheitssystem gemäß der Erfindung Verbesserungen eingebracht werden können, die den Rahmen der Ansprüche dieser Erfindung nicht sprengen, und die mit unterschiedlichen Einsatzbedingungen des Systems sowie mit einer Verbesserung der Navigations- und Informationssysteme zusammenhängen. Es können beispielsweise unterschiedliche Rechenalgorithmen, die die gestellten Aufgaben genauer lösen, eingesetzt und unterschiedliche Anzeige- und Visualisierungsverfahren für die dem Benutzer verfügbaren Information, die die angemessene Aufnahme der erhaltenen Information verbessern, sowie unterschiedliche Informationsflüsse eingesetzt werden.

Für die Fachleute der Luftverkehrslenkung sollte es klar sein, dass das integrierte Wirbelsicherheitssystem gemäß der Erfindung für die Flug- und Rollkontrolle eingesetzt werden kann, da die Überwachung der Wirbelsituation in der Umgebung der gelandeten Wirbelerzeuger sowie Wirbelerzeuger im Flug mit Hilfe der Warnsysteme durchgeführt werden kann, die an Bord, auf einem Schiff oder in Flughäfen angeordnet und Bestandteil des einheitlichen Systems sind, das die außerordentliche Situation des Einflugs in die Wirbelgefährdungszone vermeidet. Dabei können die Wirbelerzeuger Flugfahrzeuge unterschiedlichen Typs, beispielsweise Flugzeuge, Hubschrauber, unbemannte Flugzeuge, Seeschiffe, darunter Flugzeugträger, und Bodeneinrichtungen sowie andere Objekte, sein.

Das integrierte Wirbelsicherheitssystem des Flugfahrzeugs wird sinnvollerweise als Software, die an den Typ des Flugfahrzeugs, an dessen Flugbedingungen, an den

Typ der an Bord eingesetzten Ausstattung angepasst wird und mit den Informationssystemen der Luftverkehrskontrolle kompatibel ist, ausgeführt.

Das integrierte Wirbelsicherheitssystem gemäß der Erfindung kann mit Hilfe bestehender Einrichtungen leicht ausgeführt und zum Aufbau in unterschiedlichen Flugfahrzeugen sowie Trainingsgeräten für Piloten- und Lotsenschulung eingesetzt werden.

## Patentansprüche

1. Integriertes Wirbelsicherheitssystem eines Flugfahrzeugs
**gekennzeichnet durch**
- ein Flugzeuginformationssubsystem (1), das eine Information über die Konfiguration, Position, Bewegungsgeschwindigkeit und Raumorientierung des Flugzeugs festlegen, speichern und den Benutzern zur Verfügung stellen kann,
- ein Informationssubsystem (2) *des* Wirbelerzeugers, das eine Information über den Typ, die Position, Bewegungsgeschwindigkeit und *die* Orientierung des Wirbelerzeugers im Bereich des Flugfahrzeugs festlegen, speichern und den Benutzern zur Verfügung stellen kann,
- ein Umweltinformationssubsystem (3), das Informationen über Umweltbedingungen im Bereich des Flugzeugs im laufenden und prognostizierten Zeitpunkt festlegen, speichern und den Benutzern zur Verfügung stellen kann,
- ein Benutzerwarnsubsystem (4) über den eventuellen Einflug in eine Wirbelgefährdungszone des Wirbelerzeugers im prognostizierten Zeitpunkt,
- ein Benutzersubsystem (5), daß eine von anderen Systemen übermittelte Information aufnehmen, speichern und abbilden Kann und dass ein Anweisungssignal zur Durchführung eines Manövers, dass das Ausweichen vor der Wirbelgefährdungszone im Laufe einer vorgegebenen Vorhaltezeit nach dem Erhalt der Warnung über einen möglichen Einflug des Flugzeugs in die Gefährdungszone im prognostizierten Zeitpunkt gewährleistet, bilden kann, und
- ein Kommunikationssubsystem (6), das eine Integration der Subsysteme in einem Komplex gewährleistet,
wobei
- das Informationssubsystem (1) des Flugzeugs den Empfang, die Verarbeitung, das Speichern und die Übergabe an das Benutzerwarnsubsystem von Informationen mindestens über die Konfiguration, Koordinaten und Orientierung des Flugzeugs im Trägheitskoordinatensystem, über die Geschwindigkeitsprojektion des Flugzeugs und ***die*** Winkelgeschwindigkeitsprojektion im mit dem Flugzeug gekoppelten Koordinatensystem sichert,
- das Wirbelerzeugerinformationssubsystem (2) den Empfang, die Verarbeitung, das Speichern und die Übergabe an den Benutzer von Informationen mindestens über die Art der Wirbelerzeuger, deren Koordinaten und Orientierung sowie Geschwindigkeits- und Winkelgeschwindigkeitsprojektion der Wirbelerzeuger im Trägheitskoordinatensystem sichert,
- das Umweltinformationssubsystem (3) den Empfang, die Verarbeitung, das Speichern und die Übergabe an den Benutzer von Informationen mindestens über die Projektion der Windgeschwindigkeit im Trägheitskoordinatensystem in unterschiedlichen Höhen im Bereich ***der*** Wirbelschleppen und über den Turbulenzgrad der Atmosphäre sichert,
- das Benutzerwarnsubsystem (4) über den möglichen Einflug des Flugzeugs in die gefährlichen Wirbelschleppenzonen der Wirbelerzeuger mindestens eine Berechnung der Wirbelschleppenposition, -intensität den Bereich der prognostizierten Flugzeugpositionen im prognostizierten Zeitpunkt durchführt und Daten über den möglichen Einflug des Flugzeugs in die wirbelerzeugenden Gefährdungszonen im prognostizierten Zeitpunkt an das Benutzerinformationssubsystem übermittelt, und
- das Benutzersubsystem (5) Daten des Warnsubsystems mindestens über den Nullabstand vom Bereich der prognostizierten Flugzeugpositionen zu ***den*** Wirbelgefährdungszonen empfängt, verarbeitet, speichert und abbildet ***und*** ein Anweisungssignal zur Änderung der Flugzeugposition bildet, das ***die*** Erhöhung des vorgenannten Abstands gewährleistet.

2. Integriertes Wirbelsicherheitssystem nach Anspruch 1,
**dadurch gekennzeichnet, dass**
- das Informationssubsystem (1) des Flugzeugs auf der Basis der Grundausstattung des Flugzeugs und/oder Ausstattung des Boden-, See- und/oder Luft-Raumfahrt-Navigationskomplexes ausgeführt wird,
- das Informationssubsystem (2) der Wirbelerzeuger auf der Basis der Grundausstattung des Flugzeugs und/oder Grundausstattung des Wirbelerzeugers und/oder der Ausstattung der Flugkontrolle ***von*** Boden-, See- und/oder Luft-Raumfahrt-Navigationskomplexes ausgeführt wird,
- das Umweltinformationssubsystem (3) auf der Basis der Grundausstattung des Flugzeugs und/oder der Grundaustattung der meteorologischen Sicherung der Flugkontrolle oder als Bestandteil des Boden-, See- und/oder Luft-Raumfahrt-Navigationskomplexes ausgeführt wird,
- das Benutzerwarnsubsystem (4) des möglichen Einflugs des Flugzeugs in die Wirbelgefährdungszonen aufgrund der Software des Benutzerrechensystems und/oder eines bordgestützten Systems einer einheitlichen Anzeige und/oder eines Anzeigesystems ***des*** Luftverkehrskontrolldienstes oder als Bestandteil des Boden-, See- und/oder Luft-Raumfahrt-Navigationskomplexes am Lotsenstandort ausgeführt wird,
- das Benutzersubsystem (5) aufgrund der Rechen- und Navigationssysteme als Bestandteil der Grundausstattung des Flugzeugs und/oder des Boden-, See- und/oder Luft-Raumfahrt-Navigationskomplexes am Lotsenstandort ausgeführt wird und
- das Kommunikationssubsystem (6) aufgrund einer Telecode-Verbindung und/oder ***der*** bordgestützten Multiplexkanäle zum Informationsaustausch ausgeführt wird, wobei der Benutzer ***ein*** Flugzeug und/oder Luftverkehrsdienst ist und
- das Anweisungssignal im Lenkungssystem des Flugzeugs ausgeführt ist.

3. Integriertes Wirbelsicherheitssystem nach Anspruch 1,
**dadurch gekennzeichnet,**
**dass** es als Warnsubsystem (4) des möglichen Einflugs in die wirbelerzeugenden Gefährdungszonen im prognostizierten Zeitpunkt ein System enthält, das folgendes umfasst:
- eine Überwachungseinrichtung (7) der Flugzeugparameter, die Informationen mindestens über die Flugzeugkonfiguration, -position und -orientierung im Trägheitskoordinatensystem im laufenden Zeitpunkt aufnehmen kann,
- eine Überwachungseinrichtung (8) des Wirbelerzeugers, die Informationen mindestens über die Wirbelerzeugerposition die geometrische und Massencharakteristik des Wirbelerzeugers in dem Koordinatensystem im laufenden Zeitpunkt sowie Bewegungsparameter des Wirbelerzeugers aufnehmen kann,
- eine Speichereinrichtung (9), die Daten über die Wirbelerzeugerposition und - bewegungsparameter im Trägheitskoordinatensystem abspeichern kann,
- einen Detektor (10) ***der*** Umweltparameter, der Daten über Umweltparameter im gemeinsamen Bereich des Flugzeugs und Wirbelerzeugers im laufenden Zeitpunkt aufnehmen kann,
- eine Überwachungseinrichtung (11) der Wirbelschleppe, die deren Bahn und Intensität als Bahnengesamtheit der Mittelpunkte von Wirbelbereichen im Trägheitskoordinatensystem aufnehmen kann,
- eine Speichereinrichtung (12), die Informationen über die Koordinaten der Bahnpunkte und die Wirbelintensität als Bahnengesamtheit der Mittelpunkte von Wirbelbereichen im Trägheitskoordinatensystem abspeichern kann,
- eine Wähleinrichtung (13) der Vorhaltezeit, in die mindestens das Manöver der Flugbahnänderung durchgeführt werden kann, das ein Ausweichen des Flugzeugs vor der Wirbelschleppe nach der Warnung über den möglichen Einflug gewährleistet,
- eine Simulationseinrichtung (14) der Kontrollfläche, die den Vorhalteabstand errechnen kann, der dem vom Flugzeug in der Vorhaltezeit geflogenen Abstand entspricht, eine Kontrollfläche im Raum vor dem Flugzeug und senkrecht zu dessen Bewegungsrichtung im Vorhalteabstand zum Flugzeug gestalten und den prognostizierten Zeitpunkt der Überschneidung der Kontrollfläche im Trägheitskoordinatensystem bestimmen kann,
- eine Einrichtung (15) zur Bestimmung der Gefährdungszonenparameter, die die geometrische Charakteristik der Wirbelgefährdungszone als Gesamtheit der Gefährdungszonen der Wirbelbereiche, im prognostizierten Zeitpunkt bestimmen kann,
- eine Prognoseeinrichtung (16), die die Wirbelschleppenbahn als Bahnengesamtheit der Mittelpunkte von Wirbelbereichen und die Wirbelschleppenintensität im Trägheitskoordinatensystem bestimmen kann,
- ***die*** Recheneinrichtung (17) ***der*** Überschneidungspunkte, die die Koordinaten der Überschneidungspunkte der Wirbelschleppenbahn mit der Kontrollfläche im prognostizierenden Zeitpunkt der Überschneidung *mit **der*** Kontrollfläche berechnen kann,
- eine Einrichtung (18) zur Erstellung von Zonen und Bereichen, die ***eine*** Erstellung der Wirbelschleppengefährdungszone um den Überschneidungspunkt der Wirbelschleppenbahn mit der Kontrollfläche als Gesamtheit der Gefährdungszonen von Wirbelbereichen, bei denen eine Überschneidung ***der*** Bewegungsparameter des Flugzeugs die zulässige Grenzen überschreiten können, ***eine*** Erstellung der unter Verwendung festgelegter Normen der Flugdurchführung prognostizierten Flugzeugpositionin der prognostizierten Zeit der Kontrollflächenüberschneidung, ***eine*** Erstellung des Schwerpunktbereichs um den Bereich prognostizierenden Flugzeugpositionen, und eine Übermittlung der Information über die Überschneidung des Schwerpunktbereichs mit der Wirbelschleppengefährdungszone an den Benutzer gewährleistet,
- einen Übergangsblock (19), der die Koordinaten des Bereichs der prognostizierten Flugzeugpositionen, des Schwerpunktbereichs und der Wirbelgefährdungszone im mit dem Flugzeug gekoppelten Koordinatensystem errechnen kann,
- einen ersten Prüfblock (20) der Überschneidungsbedingungen, der den Abstand vom aufmerksamkeitswürdigen Gebiet zur Gefährdungszone der Wirbelschleppe bestimmen und dessen Nullgleichheit feststellen kann,
- einen zweiten Prüfblock (21) der Überschneidungsbedingungen, der den Abstand vom Bereich der prognostizierten Flugzeugpositionen zur Gefährdungszone der Wirbelschleppe bestimmen und dessen Nullgleichheit feststellen kann,
- eine erste Signaleinrichtung (22), die die Bildung und Übermittlung des Alarmsignals über den Nullabstand vom Schwerpunktbereich zur Wirbelschleppengefährdungszone an das Benutzersubsystem gewährleistet, und
- eine zweite Signaleinrichtung (23), die die Bildung und Übermittlung des Alarmsignals über den Nullabstand des Bereichs der prognostizierten Flugzeugpositionen zur Wirbelschleppengefährdungszone an das Benutzersubsystem gewährleistet.

4. Integriertes Wirbelsicherheitssystem nach Anspruch 3,
**dadurch gekennzeichnet, dass**
- die Überwachungseinrichtung (7) der Flugzeugparameter Informationen mindestens über die Konfiguration, Position, Koordinaten, Bewegungsgeschwindigkeit, Stampf-, Wind- und Krängungswinkel des Flugzeugs empfangen kann,
- die Überwachungseinrichtung (8) des Wirbelerzeugers Informationen mindestens über den Wirbelerzeugertyp, **dessen** Bewegungs- und Winkelgeschwindigkeit sowie über die Koordinaten der Bahnpunkte des Wirbelerzeugers empfangen kann,
- der Detektor (10) der Umgebungsparameter Informationen mindestens über die Stärke und Richtung der Lokalwindgeschwindigkeit, Windprofil abhängig von der Höhe, Turbulenz und dem Typ der Abschirmfläche empfangen kann,
- die Wirbelschleppenüberwachungseinrichtung (11) Bahn und Intensität der Wirbelschleppe als Bahnengesamtheit der Mittelpunkte von Wirbelbereichen ***aus*** gespeicherten Daten über den Typ des Wirbelschleppenerzeugers, die Koordinaten ***seiner*** Bahnpunkte und die Bewegungs- und Winkelgeschwindigkeit bestimmen kann,
- die Simulationseinrichtung (14) ***eine*** Kontrollfläche aus Daten über die Position, Orientierung, Bewegungsgeschwindigkeit des Flugfahrzeugs und die Vorhaltezeit simulieren kann,
- die Einrichtung (15) zur Bestimmung der Gefährdungszonenparameter die geometrische Charakteristik der Wirbelschleppengefährdungszone *aus* gespeicherten Daten über die Koordinaten der Bahnpunkte und die Intensität der Wirbelschleppe, Konfiguration, Position, Bewegungs- und Winkelgeschwindigkeit des Flugzeugs im Trägheitskoordinatensystem bestimmen kann,
- die Prognoseeinrichtung (16) die Bahn der erzeugten Wirbelschleppe und ihre Intensität aus Daten über die Wirbelschleppenbahn und -intensität als Bahnengesamtheit der Mittelpunkte von Wirbelbereichen im Trägheitskoordinatensystem bestimmen kann,
- die Recheneinrichtung (17) ***der*** Überschneidungspunkte die Koordinaten der Überschneidungspunkte der Wirbelschleppenbahn mit der Kontrollfläche aus Daten über die Koordinaten der Kontrollfläche und die Bahn der Wirbelschleppe im Trägheitskoordinatensystem im prognostizierten Zeitpunkt berechnen kann,
- die Einrichtung (18) zur Erstellung von Zonen und Bereichen die Wirbelschleppengefährdungszone, ***von*** Bereichen der prognostizierten Flugzeugposition und den Schwerpunktbereich aus Daten über die Koordinaten der Überschneidungspunkte der Wirbelschleppe im prognostizierten Zeitpunkt, aus Daten über die geometrische Charakteristik der Gefährdungszone als Gesamtheit der Gefährdungszonen der Wirbelbereiche und aus Daten über die Konfiguration, Position, Orientierung und die Bewegungs- und Winkelgeschwindigkeit des Flugzeugs unter Verwendung der für die Flugdurchführung festgelegten Normen im Trägheitskoordinatensystem erstellen kann und
- der Übergangsblock (19) die Koordinaten des Bereichs der prognostizierten Flugzeugpositionen, des Schwerpunktbereichs und der Wirbelschleppengefährdungszone im mit dem Flugzeug gekoppeltem Koordinatensystem aus Daten über die Koordinaten des Schwerpunktbereichs und der Wirbelschleppengefährdungszone im prognostizierten Zeitpunkt im Trägheitskoordinatensystem und aus Daten über die Konfiguration, Koordinaten des Flugfahrzeugs und dessen Position sowie vorzugsweise über die Stampf-, Wind- und Krängungswinkel im Trägheitskoordinatensystem im laufenden Zeitpunkt berechnen kann.

5. Integriertes Wirbelsicherheitssystem nach Anspruch 1,
**dadurch gekennzeichnet,**
**dass** das Warnsubsystem (4) eine Überwachungseinrichtung (8) des Wirbelerzeugers, Speichereinrichtungen (9, 12), eine Überwachungseinrichtung (11) der Wirbelschleppe, eine Einrichtung (15) zur Bestimmung der Gefährdungszonenparameter, eine Prognoseeinrichtung (16), eine Einrichtung (17) zur Berechnung der Überschneidungspunkte, eine Einrichtung (18) zur Erstellung von Zonen und Bereichen und zwei Prüfblöcke (19, 20) zur Überprüfung der Überschneidungsbedingungen und Signaleinrichtungen umfasst, die eine gleichzeitige Funktionsweise für jeden in der Flugzeugumgebung befindlichen Wirbelerzeuger gewährleisten können.

6. Integriertes Wirbelsicherheitssystem nach Anspruch 1,
**dadurch gekennzeichnet,**
**dass** im Warnsubsystem (4) die Wähleinrichtung (14) der Vorhaltezeit mit der Möglichkeit einer laufenden Korrektur der Vorhaltezeit ausgeführt wird, die Einrichtung (18) zur Bildung von Zonen und Bereichen mit der Möglichkeit einer laufenden Korrektur der Koordinaten des Bereichs der prognostizierten Flugzeugpositionen und einer laufenden Korrektur der Koordinaten des Schwerpunktbereichs automatisch ausgeführt wird.

7. Integriertes Wirbelsicherheitssystem nach Anspruch 1,
**dadurch gekennzeichnet,**
**dass** das Benutzersubsystem (5) eine Einrichtung (24) zur Visualisierung von Daten über die Lage des Bereichs der prognostizierten Flugzeugpositionen und Wirbelgefährdungszonen in der Kontrollfläche aufweist.

8. Integriertes Wirbelsicherheitssystem nach Anspruch 1,
**dadurch gekennzeichnet,**
**dass** das Benutzersubsystem (5) eine Anzeigeeinrichtung (22) und eine Alarmanzeigeeinrichtung (23) aufweist, die aus der visuellen, akustischen und Tastenanzeigeeinrichtungen einschaltenden Gruppen ausgewählt werden.

9. Integriertes Wirbelsicherheitssystem nach Anspruch 1,
**dadurch gekennzeichnet,**
**dass** das Warnsubsystem (4) als Einrichtung (15) zur Bestimmung der Wirbelgefährdungszonenparameter eine Einrichtung aufweist, die Folgendes umfasst:
- einen Schematisierungsblock (25) des Flugfahrzeugs, der die Gesamtheit der geometrischen Flugzeugcharakteristik berechnen kann, die für die Berechnung der auf das Flugzeug wirkenden, wirbelinduzierenden Zusatzkräfte und -momente erforderlich sind,
- einen Block (26) zur Bestimmung der im vorgegebenen Raumpunkt auf das Flugzeug wirkenden, wirbelinduzierenden Zusatzkräfte und -momente, der ***sie*** aufgrund der gespeicherten Koordinaten der Bahnpunkte der Wirbelmittelpunkte und der Wirbelintensität als Bahnengesamtheit der Mittelpunkte von Wirbelbereichen im Trägheitskoordinatensystem, aufgrund der Konfiguration, Lage, Bewegungs- und Winkelgeschwindigkeit des Flugzeugs im Trägheitskoordinatensystem und aufgrund der geometrischen Charakteristik des Flugzeugs berechnen kann,
- einen Block (27) zur Bestimmung des Gefährdungspotentiats des Wirbels im vorgegebenen Raumpunkt, der die Wirbelgefährdung nach einem vom Benutzer vorgegebenen Gefahrenkriterium auswerten kann, und
- einen Block (28) zur Bestimmung der Menge der Raumpunkte, in denen die wirbelinduzierenden Zusatzkräfte und -momente gefährlich sind, der die Koordinaten der in ***der*** Gefährdungszone liegenden Raumpunkte auf der Wahlbasis nach einem vom Benutzer vorgegebenen Gefahrenkriterium bestimmen kann, und
- einen Block (29) zur Bestimmung der geometrischen Charakteristik der Wirbeischleppengefährdungszone, der diese aufgrund der Koordinaten von in der Gefährdungszone liegenden Punkten berechnen kann.

10. Integriertes Wirbelsicherheitssystem nach Anspruch 9,
**dadurch gekennzeichnet,**
**dass** der Block (29) zur Bestimmung der geometrischen Charakteristik der Wirbelgefährdungszone in der Einrichtung (15) zur Bestimmung der Gefährdungszonenparameter im Warnsubsystem (4) die Grenze der Gefährdungszone anpassen kann.

11. Integriertes Wirbelsicherheitssystem nach Anspruch 1,
**dadurch gekennzeichnet,**
**dass** als Gefahrenkriterium der Wirbelschleppe ein zulässiger Krängungswert des Flugzeugs ausgewählt wird.

12. Integriertes Wirbelsicherheitssystem nach Anspruch 1,
**dadurch gekennzeichnet,**
**dass** als Gefahrenkriterium der Wirbelschleppe ein wirbelinduzierendes Krängungsmoment des Flugzeugs ausgewählt wird.

13. Integriertes Wirbelsicherheitssystem nach Anspruch 1,
**dadurch gekennzeichnet,**
**dass** im Warnsubsystem (4) die Überwachungseinrichtung (11) der Wirbelschleppe und die Prognoseeinrichtung (16) eine programmierbare Komponente enthalten und die Einrichtung (15) zur Bestimmung der Gefährdungszonenparameter in der Software der programmierbaren Komponenten ausgeführt wird.

14. Integriertes Wirbelsicherheitssystem nach Anspruch 1,
**dadurch gekennzeichnet,**
**dass** die Einrichtungen und Blöcke des Warnsubsystems (4) und des Benutzersubsystems (5) unterschiedliche Standorte aufweisen.

15. Integriertes Wirbelsicherheitssystem nach Anspruch 1,
**dadurch gekennzeichnet,**
**dass** das Benutzersubsystem (5) ein System zur Datenspeicherung über die Vorhaltezeit, Koordinaten der Kontrollfläche, den Bereich der prognostizierten Flugzeugpositionen und der Wirbelgefährdungszonen im Laufe mindestens der Alarmanzeige des Nullabstands des Bereichs der prognostizierten Flugzeugpositionen **zum** Wirbelgefährdungsbereich aufweist.

## Claims

1. An integrated turbulence safety system of an aircraft,
**characterized by**
- an aircraft information subsystem (1), which can define information about the configuration, position, speed of motion and spatial orientation of the aircraft, store it in memory, and make it available to the users,
- an information subsystem (2) of the turbulence generator, which can store information about the type, position, speed of motion and the orientation of the turbulence generator in the vicinity of the aircraft, store it in memory, and make it available to the users,
- an ambient information subsystem (3), which can define information about ambient conditions in the vicinity of the aircraft at the current time and predicted time, store it in memory, and make it available to the users,
- a user warning subsystem (4) about the potential flight into a turbulence danger zone of the turbulence generator at the predicted time,
- a user subsystem (5), which can pick up, store and display information forwarded from other systems and which can form an instruction signal for performing a maneuver, which ensures deflection before the turbulence danger zone in the course of a predetermined reserved time after the receipt of the warning about a possible flight of the aircraft into the danger zone at the predicted time, and
- a communications subsystem (6), which ensures integration of the subsystems in a complex,
wherein
the information subsystem (1) of the aircraft ensures the reception, processing, storage in memory and transfer to the user warning subsystem of information about at least the configuration, coordinates and orientation of the aircraft in the inertial coordinate system, by way of the speed projection of the aircraft and the angular speed projection in the coordinate system coupled with the aircraft;
- the turbulence generator subsystem (2) ensures the reception, processing, storage in memory and transfer to the user of information about at least the type of turbulence generator, its coordinates and orientation, as well as the speed and angular speed projection of the turbulence generator in the inertial coordinate system;
- the ambient information subsystem (3) ensures the reception, processing, storage in memory and transfer to the user of information about at least the projection of the wind speed in the inertial coordinate system at various altitudes in the vicinity of the turbulence wakes and about the degree of turbulence in the atmosphere;
- the user warning subsystem (4), with regard to the possible flight of the aircraft into the dangerous turbulence wake zones of the turbulence generators, performs at least one calculation of the turbulence wake position, turbulence wake intensity, and the vicinity of the predicted aircraft positions at the predicted time and forwards data about the possible flight of the aircraft into the turbulence-generating danger zones at the predicted time to the user information subsystem; and
- the user subsystem (5) receives, processes, stores in memory and displays data of the warning subsystem about at least the zero distance of the vicinity of the predicted aircraft positions from the turbulence danger zones and forms an instruction signal for changing the aircraft position, which ensures the increasing of the aforementioned distance.

2. The integrated turbulence safety system as defined by claim 1,
**characterized in that**
- the information subsystem (1) of the aircraft is embodied on the basis of the standard equipment of the aircraft and/or equipment of the ground, sea, and/or air and space navigation complex;
- the information subsystem (2) of the turbulence generators is embodied on the basis of the standard equipment of the aircraft and/or the standard equipment of the turbulence generator and/or the equipment of air traffic control of ground, sea and/or air and space navigation complex;
- the ambient information subsystem (3) is embodied on the basis of the standard equipment of the aircraft and/or the standard equipment of the air traffic control meteorological safety system or as a component of the ground, sea and/or air and space navigation complex;
- the user warning subsystem (4) for the possible flight of the aircraft into the turbulence danger zones is embodied on the basis of the software of the user computer system and/or of at least one on-board system of a uniform display and/or of a display system of the air traffic control service or as a component of the ground, sea, and/or air and space navigation complex at the flight controller location;
- the user subsystem (5) is embodied on the basis of the computation and navigation systems as a component of the standard equipment of the aircraft and/or of the ground, sea and/or air and space navigation complex at the flight controller location; and
- the communications subsystem (6) is embodied on the basis of a telecode connection and/or of the on-board multiplex channels for information exchange, and the user is an aircraft and/or an air traffic control service; and
- the instruction signal is embodied in the steering system of the aircraft.

3. The integrated turbulence safety system as defined by claim 1,
**characterized in that**
as a warning subsystem (4) for the possible flight into the turbulence-generating danger zones at the predicted time, it contains a system which includes the following:
- a monitoring device (7) of the aircraft parameters, which can receive information about at least the aircraft configuration, position and orientation in the inertial coordinate system at the current time;
- a monitoring device (8) of the turbulence generator, which can receive information about at least the turbulence generator position, the geometric and mass characteristics of the turbulence generator in the coordinate system at the current time, and motion parameters of the turbulence generator;
- a memory device (9), which can store data about the turbulence generator position and turbulence generator motion parameters in memory in the inertial coordinate system;
- a detector (10) for the ambient parameters, which can receive data about ambient parameters in the common vicinity of the aircraft and turbulence generator at the current time;
- a monitoring device (11) of the turbulence wake, which can receive its path and intensity as a total path of the center points of turbulent areas in the inertial coordinate system;
- a memory device (12), which can store information in memory in the inertial coordinate system about the coordinates of the path points and the turbulence intensity as a total path of the center points of turbulent areas;
- a selector device (13) for the rate time, in which at least the maneuver for changing the flight path can be performed, which ensures that the aircraft deflects before the turbulence wake after being warned about the possible flight into it;
- a simulator (14) of the control surface, which in the inertial coordinate system can calculate the lead distance that corresponds to the distance flown by the aircraft in the rate time, design a control surface in the space ahead of the aircraft and perpendicular to its direction of motion at the lead distance from the aircraft, and determine the predicted time of intersection of the control surface;
- a device (15) for determining the danger zone parameters, which can determine the geometric characteristics of the turbulence danger zone as a totality of the danger zones of the turbulent areas, at the predicted time;
- a prediction device (16), which can determine the turbulence wake path as a total path of the center points of turbulent areas and the turbulence path intensity in the inertial coordinate system;
- the computer (17) of the points of intersection, which can calculate the coordinates of the points of intersection of the turbulence wake path and the control surface at the predicted time of intersection with the control surface;
- a device (18) for creating zones and areas, which ensures the creation of the turbulence wake danger zone around the point of intersection of the turbulence wake path and the control surface as a totality of the danger zones of turbulent areas, in which zones an intersection of the motion parameters of the aircraft can exceed the allowable limits, the creation of the predicted aircraft position using fixed standards for flight performance at the predicted time of the control surface intersection, the creation of the center of gravity zone around the vicinity of predicted aircraft positions, and forwarding of the information about the intersection of the center of gravity zone with the turbulence wake danger zone to the user;
- a transition block (19), which can calculate the coordinates of the vicinity of predicted aircraft positions, of the center of gravity zone, and of the turbulence danger zone in the coordinate system coupled with the aircraft;
- a first test block (20) of the intersection conditions, which can determine the distance of the significant from the danger zone of the turbulence wake and ascertain its identity to zero;
- a second test block (21) of the intersection transitions, which can determine the distance from the vicinity of the predicted aircraft positions from the danger zone of the turbulence wake and ascertain its equality to zero;
- a first signal device (22), which ensures the formation and forwarding of the alarm signal about the zero distance from the center of gravity zone from the turbulence wake danger zone to the user subsystem; and
- a second signal device (23), which ensures the formation and forwarding of the alarm signal about the zero distance of the vicinity of the predicted aircraft positions from the turbulence wake danger zone to the user subsystem.

4. The integrated turbulence safety system as defined by claim 3,
**characterized in that**
- the monitoring device (7) of the aircraft parameters can receive information about at least the configuration, position, coordinates, speed of motion, and pitch, wind and listing angle of the aircraft;
- the monitoring device (8) of the turbulence generator can receive information about at least the turbulence generator type, its speed of motion and angular speed, and about the coordinates of the path points of the turbulence generator;
- the detector (10) for the ambient parameters can receive information about at least the intensity and direction of the local wind speed, wind profile as a function of the altitude, turbulence, and the type of shielding face;
- the turbulence wake monitoring device (11) can determine the path and intensity of the turbulence wake as a total path of the center points of turbulent areas from data stored in memory about the type of turbulence wake generator, the coordinates of its path points, and the speed of motion and angular speed;
- the simulator (14) can simulate a control surface from data about the position, orientation, and speed of motion of the aircraft and the rate time;
- the device (15) for determining the danger zone parameters can determine the geometric characteristics of the turbulence wake danger zone from data stored in memory about the coordinates of the path points and the intensity of the turbulence wake, and the configuration, position, speed of motion and angular speed of the aircraft, in the inertial coordinate system;
- the prediction device (16) can, in the inertial coordinate system, determine the path of the generated turbulence wake and its intensity from data about the turbulence wake path and turbulence wake intensity as a total path of the center points of turbulent areas;
- the computer (17) for the points of intersection can calculate the coordinates of the points of intersection of the turbulence wake path and the control surface from data about the coordinates of the control surface and about the path of the turbulence wake, in the inertial coordinate system, at the predicted time;
- the device (18) for creating zones and areas can create the turbulence wake danger zone, areas of the predicted aircraft position, and the center of gravity area, from data about the coordinates of the points of intersection of the turbulence wake at the predicted time, from data about the geometric characteristics of the danger zone as a totality of the danger zones of the turbulence areas, and from data about the configuration, position, orientation, and the speed of motion and angular speed of the aircraft, in the inertial coordinate system, using the standards defined for flight performance; and
- the transition block (19) can calculate the coordinates of the area of the predicted aircraft positions, of the center of gravity area and of the turbulence wake danger zone in the coordinate system, coupled with the aircraft, from data about the coordinates of the center of gravity area and of the turbulence wake danger zone at the predicted time in the inertial coordinate system and from data about the configuration, coordinates of the aircraft, and its position and preferably about the pitch, wind and listing angle, in the inertial coordinate system at the current time.

5. The integrated turbulence safety system defined by claim 1,
**characterized in that**
the warning subsystem (4) includes a monitoring device (8) for the turbulence generator, memory devices (9, 12), a monitoring device (11) for the turbulence wake, a device (15) for determining the danger zone parameters, a prediction device (16), a device (17) for calculating the points of intersection, a device (18) for creating zones and areas, and two test blocks (19, 20) for checking the intersection conditions, and signal devices, which can ensure simultaneous function for each turbulence generator located in the surroundings of the aircraft.

6. The integrated turbulence safety system as defined by claim 1,
**characterized in that**
in the warning subsystem (4), the selector device (14) for the rate time is embodied with the capability of an ongoing correction of the rate time, and the device (18) for forming zones and areas is embodied with the capability of automatic ongoing correction of the coordinates of the area of the predicted aircraft positions and automatic ongoing correction of the coordinates of the center of gravity area.

7. The integrated turbulence safety system as defined by claim 1,
**characterized in that**
the user subsystem (5) has a device (24) for displaying data about the location of the area of the predicted aircraft positions and turbulence danger zones in the control surface.

8. The integrated turbulence safety system as defined by claim 1,
**characterized in that**
the user subsystem (5) has a display device (22) and an alarm display device (23), which are selected from the groups that switch on visual, acoustic and touch display devices.

9. The integrated turbulence safety system as defined by claim 1,
**characterized in that**
the warning subsystem (4), as a device (15) for determining the turbulence danger zone parameters, has a device which includes the following:
- a schematization block (25) of the aircraft, which can calculate the totality of the geometric aircraft characteristics which area necessary for calculating the turbulence-inducing supplementary forces and moments that act on the aircraft;
- a block (26) for determining the turbulence-induced additional forces and moments acting on the aircraft at the predetermined point in space, which block can calculate these forces and moments on the basis of the coordinates stored in memory of the path points of the center points of the turbulence and of the turbulence intensity as a total path of the center points of turbulence areas in the inertial coordinate system, on the basis of the configuration, location, speed of motion and angular speed of the aircraft in the inertial coordinate system, and on the basis of the geometric characteristics of the aircraft;
- a block (27) for determining the potential danger of the turbulence at the predetermined point in space, which block can evaluate the danger of turbulence in accordance with a danger criterion predetermined by the user; and
- a block (28) for determining the quantity of points in space in which the turbulence-inducing additional forces and moments are dangerous, which block can determine the coordinates of the points in space, located in the danger zone, on the selected basis in accordance with a danger criterion predetermined by the user; and
- a block (29) for determining the geometric characteristics of the turbulence wake danger zone, which block can calculate them on the basis of the coordinates of points located in the danger zone.

10. The integrated turbulence safety system as defined by claim 9,
**characterized in that**
the block (29) for determining the geometric characteristics of the turbulence danger zone can adapt a boundary of the danger zone in the warning subsystem (4) in the device (15) for determining the danger zone parameters.

11. The integrated turbulence safety system as defined by claim 1,
**characterized in that**
as the danger criterion for the turbulence wake, a permissible listing value of the aircraft is selected.

12. The integrated turbulence safety system as defined by claim 1,
**characterized in that**
as the danger criterion for the turbulence wake, a turbulence-inducing listing moment of the aircraft is selected.

13. The integrated turbulence safety system as defined by claim 1,
**characterized in that**
in the warning subsystem (4), the monitoring device (11) for the turbulence wake and the prediction device (16) contain a programmable component, and the device (15) is embodied for determining the danger zone parameter in the software of the programmable component.

14. The integrated turbulence safety system as defined by claim 1,
**characterized in that**
the devices and blocks of the warning subsystem (4) and of the user subsystem (5) have different locations.

15. The integrated turbulence safety system as defined by claim 1,
**characterized in that**
the user subsystem (5) has a system for storing data in memory about the rate time, coordinates of the control surface, the area of the predicted aircraft positions, and the turbulence danger zones in the course of at least the alarm display of the zero distance of the area of the predicted aircraft positions from the turbulence danger area.

## Revendications

1. Système intégré de sécurité en matière de tourbillons d'un aéronef,
**caractérisé par**
- un sous-système d'information de bord (1), capable de déterminer, stocker et mettre à la disposition des utilisateurs une information sur la configuration, la position, la vitesse de déplacement et l'orientation spatiale de l'avion,
- un sous-système d'information (2) du générateur de tourbillons, capable de déterminer, stocker et mettre à la disposition des utilisateurs une information sur le type, la position, la vitesse de déplacement et l'orientation du générateur de tourbillons dans la région de l'aéronef,
- un sous-système d'information environnementale (3), capable de déterminer, stocker et mettre à la disposition des utilisateurs des informations sur les conditions environnementales dans la région de l'avion à l'instant courant et à un instant prédit,
- un sous-système d'avertissement des utilisateurs (4) de l'entrée éventuelle dans la zone de danger de tourbillon du générateur de tourbillons à l'instant prédit,
- un sous-système d'utilisateur (5), capable de recevoir, stocker et représenter une information transmise par d'autres systèmes et de former un signal de consigne pour effectuer une manoeuvre qui garantit l'évitement de la zone de danger de tourbillon au cours d'un temps différentiel prédéfini après la réception de l'avertissement d'une possible entrée de l'avion dans la zone dangereuse à l'instant prédit, et
- un sous-système de communication (6) qui garantit une intégration des sous-systèmes dans un complexe,
dans lequel
- le sous-système d'information (1) de l'avion assure la réception, le traitement, le stockage et la transmission au sous-système d'avertissement des utilisateurs d'informations au moins sur la configuration, les coordonnées et l'orientation de l'avion dans le système de coordonnées inertiel, sur la projection de la vitesse de l'avion et la projection de la vitesse angulaire dans le système de coordonnées couplé à l'avion,
- le sous-système d'information du générateur de tourbillons (2) assure la réception, le traitement, le stockage et la transmission à l'utilisateur d'informations au moins sur le type des générateurs de tourbillons, leurs coordonnées et orientation ainsi que sur la projection de la vitesse et la projection de la vitesse angulaire des générateurs de tourbillons dans le système de coordonnées inertiel,
- le sous-système d'information environnementale (3) assure la réception, le traitement, le stockage et la transmission à l'utilisateur d'informations au moins sur la projection de la vitesse du vent dans le système de coordonnées inertiel à différentes altitudes dans la région des tourbillons de sillage et sur le degré de turbulence de l'atmosphère,
- le sous-système d'avertissement des utilisateurs (4) de l'entrée possible de l'avion dans les zones de danger de tourbillon de sillage des générateurs de tourbillons effectue au moins un calcul de la position et de l'intensité des tourbillons de sillage dans la région des positions prédites de l'avion à l'instant prédit et transmet au sous-système d'information des utilisateurs des données sur l'entrée possible de l'avion dans les zones dangereuses génératrices de tourbillons à l'instant prédit, et
- le sous-système d'utilisateur (5) reçoit, traite, stocke et représente des données du sous-système d'avertissement au moins sur la distance nulle de la région des positions prédites de l'avion aux zones de danger de tourbillon et forme un signal de consigne pour modifier la position de l'avion et garantir l'augmentation de la distance précitée.

2. Système intégré de sécurité en matière de tourbillons selon la revendication 1, **caractérisé en ce que**
- le sous-système d'information (1) de l'avion est réalisé sur la base de l'équipement de base de l'avion et/ou de l'équipement du complexe de navigation au sol, en mer et/ou aérospatial,
- le sous-système d'information (2) des générateurs de tourbillons est réalisé sur la base de l'équipement de base de l'avion et/ou de l'équipement de base du générateur de tourbillons et/ou de l'équipement de contrôle aérien du complexe de navigation au sol, en mer et/ou aérospatial,
- le sous-système d'information environnementale (3) est réalisé sur la base de l'équipement de base de l'avion et/ou de l'équipement de base de la sécurité météorologique du contrôle aérien ou comme composant du complexe de navigation au sol, en mer et/ou aérospatial,
- le sous-système d'avertissement des utilisateurs (4) de l'entrée possible de l'avion dans les zones de danger de tourbillon est réalisé sur la base du logiciel du système de calcul de l'utilisateur et/ou d'un système embarqué d'un affichage standardisé et/ou d'un système d'affichage du service de contrôle du trafic aérien ou comme composant du complexe de navigation au sol, en mer et/ou aérospatial au centre de contrôle aérien,
- le sous-système d'utilisateur (5) est réalisé sur la base du système de calcul et de navigation comme composant de l'équipement de base de l'avion et/ou du complexe de navigation au sol, en mer et/ou aérospatial au centre de contrôle aérien et
- le sous-système de communication (6) est réalisé sur la base d'une liaison Telecode et/ou des canaux multiplex embarqués pour l'échange d'informations, l'utilisateur étant un avion et/ou un service de trafic aérien et
- le signal de consigne étant réalisé dans le système de direction de l'avion.

3. Système intégré de sécurité en matière de tourbillons selon la revendication 1,
**caractérisé en ce**
**qu'**il contient comme sous-système d'avertissement (4) de l'entrée possible dans les zones dangereuses génératrices de tourbillons à l'instant prédit un système qui comprend :
- un dispositif de surveillance (7) des paramètres de l'avion, capable de recevoir des informations au moins sur la configuration, la position et l'orientation de l'avion dans le système de coordonnées inertiel à l'instant courant,
- un dispositif de surveillance (8) du générateur de tourbillons, capable de recevoir des informations au moins sur la position du générateur de tourbillons, les caractéristiques géométriques et dimensionnelles du générateur de tourbillons dans le système de coordonnées à l'instant courant ainsi que des paramètres de déplacement du générateur de tourbillons,
- un dispositif de stockage (9), capable de stocker des données sur la position et les paramètres de déplacement du générateur de tourbillons dans le système de coordonnées inertiel,
- un détecteur (10) des paramètres environnementaux, capable de recevoir des données sur les paramètres environnementaux dans la région commune de l'avion et du générateur de tourbillons à l'instant courant,
- un dispositif de surveillance (11) du tourbillon de sillage, capable de recevoir sa trajectoire et son intensité sous forme d'ensemble de trajectoires des points milieu de régions tourbillonnaires dans le système de coordonnées inertiel,
- un dispositif de stockage (12), capable de stocker des informations sur les coordonnées des points de trajectoire et l'intensité des tourbillons sous forme d'ensemble de trajectoires des points milieu de régions tourbillonnaires dans le système de coordonnées inertiel,
- un dispositif de sélection (13) du temps différentiel pendant lequel il est possible d'effectuer au moins la manoeuvre de changement de trajectoire de vol qui garantit à l'avion un évitement du tourbillon de sillage après l'avertissement de l'entrée possible,
- un dispositif de simulation (14) de la surface de contrôle, capable de calculer la distance différentielle qui correspond à la distance parcourue par l'avion dans le temps différentiel, de construire une surface de contrôle dans l'espace devant l'avion et perpendiculairement à sa direction de déplacement à la distance différentielle de l'avion et de déterminer l'instant prédit de croisement de la surface de contrôle dans le système de coordonnées inertiel,
- un dispositif (15) de détermination des paramètres de la zone dangereuse, capable de déterminer les caractéristiques géométriques de la zone de danger de tourbillon sous forme d'ensemble des zones dangereuses des régions tourbillonnaires à l'instant prédit,
- un dispositif de prédiction (16), capable de déterminer la trajectoire du tourbillon de sillage sous forme d'ensemble de trajectoires des points milieu de régions tourbillonnaires et l'intensité du tourbillon de sillage dans le système de coordonnées inertiel,
- le dispositif de calcul (17) des points de croisement, capable de calculer les coordonnées des points de croisement de la trajectoire du tourbillon de sillage avec la surface de contrôle à l'instant prédit du croisement avec la surface de contrôle,
- un dispositif (18) d'élaboration de zones et de régions, qui garantit une élaboration de la zone de danger de tourbillon de sillage autour du point de croisement de la trajectoire du tourbillon de sillage avec la surface de contrôle sous forme d'ensemble des zones dangereuses de régions tourbillonnaires, dans lesquelles, en cas de croisement, les paramètres de déplacement de l'avion peuvent dépasser les tolérances admissibles, une élaboration de la position prédite de l'avion à l'instant prédit de croisement de la surface de contrôle en utilisant les normes établies pour l'exécution du vol, une élaboration de la région du centre de gravité autour de la région des positions prédites de l'avion, et une transmission à l'utilisateur de l'information sur le croisement de la région du centre de gravité avec la zone de danger de tourbillon de sillage,
- un bloc de transition (19), capable de calculer les coordonnées de la région des positions prédites de l'avion, de la région du centre de gravité et de la zone de danger de tourbillon dans le système de coordonnées couplé à l'avion,
- un premier bloc de contrôle (20) des conditions de croisement, capable de déterminer la distance du domaine digne d'attention à la zone dangereuse du tourbillon de sillage et de définir son égalité à zéro,
- un deuxième bloc de contrôle (21) des conditions de croisement, capable de déterminer la distance de la région des positions prédites de l'avion à la zone dangereuse du tourbillon de sillage et de définir son égalité à zéro,
- un premier dispositif de signalisation (22), qui garantit la formation et la transmission du signal d'alarme sur la distance nulle de la région du centre de gravité à la zone dangereuse du tourbillon de sillage au sous-système d'utilisateur, et
- un deuxième dispositif de signalisation (23), qui garantit la formation et la transmission du signal d'alarme sur la distance nulle de la région des positions prédites de l'avion à la zone dangereuse du tourbillon de sillage au sous-système d'utilisateur.

4. Système intégré de sécurité en matière de tourbillons selon la revendication 3,
**caractérisé en ce que**
- le dispositif de surveillance (7) des paramètres de l'avion peut recevoir des informations au moins sur la configuration, la position, les coordonnées, la vitesse de déplacement, l'angle de tangage, l'angle du vent et l'angle de gîte de l'avion,
- le dispositif de surveillance (8) du générateur de tourbillons peut recevoir des informations au moins sur le type de générateur de tourbillons, sa vitesse de déplacement et sa vitesse angulaire ainsi que sur les coordonnées des points de trajectoire du générateur de tourbillons,
- le détecteur (10) des paramètres environnementaux peut recevoir des informations au moins sur la force et la direction de la vitesse de vent locale, le profil du vent en fonction de la hauteur, de la turbulence et du type de surface de protection,
- le dispositif de surveillance (11) du tourbillon de sillage peut déterminer la trajectoire et l'intensité du tourbillon de sillage sous forme d'ensemble de trajectoires des points milieu de régions tourbillonnaires à partir de données stockées sur le type de générateur de tourbillon de sillage, les coordonnées de ses points de trajectoire, la vitesse de déplacement et la vitesse angulaire,
- le dispositif de simulation (14) peut simuler une surface de contrôle à partir de données sur la position, l'orientation, la vitesse de déplacement de l'aéronef et le temps différentiel,
- le dispositif (15) de détermination des paramètres de la zone dangereuse peut déterminer les caractéristiques géométriques de la zone dangereuse du tourbillon de sillage à partir de données stockées sur les coordonnées des points de trajectoire et l'intensité du tourbillon de sillage, la configuration, la position, la vitesse de déplacement et la vitesse angulaire de l'avion dans le système de coordonnées inertiel,
- le dispositif de prédiction (16) peut déterminer la trajectoire du tourbillon de sillage généré et son intensité à partir de données sur la trajectoire et l'intensité du tourbillon de sillage sous forme d'ensemble de trajectoires des points milieu de régions tourbillonnaires dans le système de coordonnées inertiel,
- le dispositif de calcul (17) des points de croisement peut calculer les coordonnées des points de croisement de la trajectoire du tourbillon de sillage avec la surface de contrôle à partir de données sur les coordonnées de la surface de contrôle et la trajectoire du tourbillon de sillage dans le système de coordonnées inertiel à l'instant prédit,
- le dispositif (18) d'élaboration de zones et de régions peut élaborer la zone dangereuse du tourbillon de sillage, les régions de position prédite de l'avion et la région du centre de gravité à partir de données sur les coordonnées des points de croisement du tourbillon de sillage à l'instant prédit, à partir de données sur les caractéristiques géométriques de la zone dangereuse sous forme d'ensemble des zones dangereuses des régions tourbillonnaires et à partir de données sur la configuration, la position, l'orientation, la vitesse de déplacement et la vitesse angulaire de l'avion en utilisant les normes établies pour l'exécution du vol dans le système de coordonnées inertiel,
- le bloc de transition (19) peut calculer les coordonnées de la région des positions prédites de l'avion, de la région du centre de gravité et de la zone dangereuse du tourbillon de sillage dans le système de coordonnées couplé à l'avion à partir de données sur les coordonnées de la région du centre de gravité et de la zone dangereuse du tourbillon de sillage à l'instant prédit dans le système de coordonnées inertiel et à partir de données sur la configuration, les coordonnées de l'aéronef et sa position ainsi que, de préférence, sur l'angle de tangage, l'angle du vent et l'angle de gîte dans le système de coordonnées inertiel à l'instant courant.

5. Système intégré de sécurité en matière de tourbillons selon la revendication 1,
**caractérisé en ce**
**que** le sous-système d'avertissement (4) comprend un dispositif de surveillance (8) du générateur de tourbillons, des dispositifs de stockage (9, 12), un dispositif de surveillance (11) du tourbillon de sillage, un dispositif (15) de détermination des paramètres de la zone dangereuse, un dispositif de prédiction (16), un dispositif (17) de calcul des points de croisement, un dispositif (18) d'élaboration de zones et de régions, et deux blocs de contrôle (19, 20) pour vérifier les conditions de croisement et des dispositifs de signalisation, lesquels sont capables de garantir un fonctionnement simultané pour chaque générateur de tourbillons se trouvant aux environs de l'avion.

6. Système intégré de sécurité en matière de tourbillons selon la revendication 1,
**caractérisé en ce**
**que** dans le sous-système d'avertissement (4), le dispositif de sélection (14) du temps différentiel est réalisé avec la possibilité d'une correction continue du temps différentiel, le dispositif (18) de formation de zones et de régions avec la possibilité d'une correction continue des coordonnées de la région des positions prédites de l'avion et d'une correction continue des coordonnées de la région du centre de gravité, lesquelles corrections sont automatiques.

7. Système intégré de sécurité en matière de tourbillons selon la revendication 1,
**caractérisé en ce**
**que** le sous-système d'utilisateur (5) présente un dispositif (24) pour la visualisation de données sur la position de la région des positions prédites de l'avion et des zones de danger de tourbillon sur la surface de contrôle.

8. Système intégré de sécurité en matière de tourbillons selon la revendication 1,
**caractérisé en ce**
**que** le sous-système d'utilisateur (5) présente un dispositif d'affichage (22) et un dispositif indicateur d'alarme (23) qui sont sélectionnés à partir des groupes activant des dispositifs visuels, acoustiques et d'indication de touches.

9. Système intégré de sécurité en matière de tourbillons selon la revendication 1,
**caractérisé en ce**
**que** le sous-système d'avertissement (4) présente comme dispositif (15) de détermination des paramètres de zone de danger de tourbillon un dispositif qui comprend :
- un bloc de schématisation (25) de l'aéronef, capable de calculer l'ensemble des caractéristiques géométriques de l'avion qui sont nécessaires pour le calcul des forces et couples supplémentaires, induisant des tourbillons, qui agissent sur l'avion,
- un bloc (26) de détermination des forces et couples supplémentaires, induisant des tourbillons, qui agissent sur l'avion au point de l'espace prédéfini, qu'il est capable de calculer à partir des coordonnées stockées des points de trajectoire des points milieu du tourbillon et de l'intensité du tourbillon sous forme d'ensemble de trajectoires des points milieu de régions tourbillonnaires dans le système de coordonnées inertiel, à partir de la configuration, de la position, de la vitesse de déplacement et de la vitesse angulaire de l'avion dans le système de coordonnées inertiel et à partir des caractéristiques géométriques de l'avion,
- un bloc (27) de détermination du potentiel de danger du tourbillon au point de l'espace prédéfini, qui est capable d'évaluer le danger du tourbillon selon un critère de danger prédéfini par l'utilisateur,
- un bloc (28) de détermination de la quantité de points de l'espace où les forces et couples supplémentaires induisant des tourbillons sont dangereuses, qui est capable de déterminer les coordonnées des points de l'espace situés dans la zone dangereuse sur la base du choix selon un critère de danger prédéfini par l'utilisateur, et
- un bloc (29) de détermination des caractéristiques géométriques de la zone dangereuse du tourbillon de sillage, qui est capable de calculer celle-ci à partir des coordonnées de points situés dans la zone dangereuse.

10. Système intégré de sécurité en matière de tourbillons selon la revendication 9,
**caractérisé en ce**
**que** le bloc (29) de détermination des caractéristiques géométriques de la zone de danger de tourbillon dans le dispositif (15) de détermination des paramètres de la zone dangereuse est capable d'adapter la limite de la zone dangereuse dans le sous-système d'avertissement (4).

11. Système intégré de sécurité en matière de tourbillons selon la revendication 1,
**caractérisé en ce**
**qu'**une valeur de gîte admissible de l'avion est choisie comme critère de danger du tourbillon de sillage.

12. Système intégré de sécurité en matière de tourbillons selon la revendication 1,
**caractérisé en ce**
**qu'**un couple de gîte induisant un tourbillon est choisi comme critère de danger du tourbillon de sillage.

13. Système intégré de sécurité en matière de tourbillons selon la revendication 1,
**caractérisé en ce**
**que** dans le sous-système d'avertissement (4), le dispositif de surveillance (11) du tourbillon de sillage et le dispositif de prédiction (16) contiennent un composant programmable et le dispositif (15) de détermination des paramètres de la zone dangereuse est réalisé dans le logiciel du composant programmable.

14. Système intégré de sécurité en matière de tourbillons selon la revendication 1,
**caractérisé en ce**
**que** les dispositifs et blocs du sous-système d'avertissement (4) et du sous-système d'utilisateur (5) présentent des emplacements différents.

15. Système intégré de sécurité en matière de tourbillons selon la revendication 1,
**caractérisé en ce**
**que** le sous-système d'utilisateur (5) présente un système de stockage de données sur le temps différentiel, les coordonnées de la surface de contrôle, la région des positions prédites de l'avion et des zones de danger de tourbillon au cours au moins de l'affichage d'alarme de la distance nulle de la région des positions prédites de l'avion à la zone de danger de tourbillon.
